(19) Europäisches Patentamt
European Patent Office
Office européen des brevets

(11) EP 0 559 667 B1

(12) **EUROPÄISCHE PATENTSCHRIFT**

(45) Veröffentlichungstag und Bekanntmachung des Hinweises auf die Patenterteilung:
**09.04.1997 Patentblatt 1997/15**

(21) Anmeldenummer: **91919461.3**

(22) Anmeldetag: **16.11.1991**

(51) Int Cl.$^{6}$: **C08G 69/32**

(86) Internationale Anmeldenummer:
**PCT/EP91/02112**

(87) Internationale Veröffentlichungsnummer:
**WO 92/09648 (11.06.1992 Gazette 1992/13)**

(54) **THERMOPLASTISCH VERARBEITBARES AROMATISCHES POLYETHERAMID**

THERMOPLASTICALLY PROCESSABLE AROMATIC POLYETHER AMIDE

POLYETHERAMIDE AROMATIQUE THERMOPLASTIQUE

(84) Benannte Vertragsstaaten:
**DE**

(30) Priorität: **01.12.1990 DE 4038393**

(43) Veröffentlichungstag der Anmeldung:
**15.09.1993 Patentblatt 1993/37**

(73) Patentinhaber: **HOECHST AKTIENGESELLSCHAFT
65926 Frankfurt am Main (DE)**

(72) Erfinder:
- **CHERDRON, Harald
D-6200 Wiesbaden (DE)**
- **KREUDER, Willi
D-6500 Mainz (DE)**
- **SCHNELLER, Arnold
D-6500 Mainz (DE)**
- **HERRMANN-SCHÖNHERR, Otto
D-6140 Bensheim 3 (DE)**

(56) Entgegenhaltungen:
**EP-A- 0 344 593**
**EP-A- 0 344 594**
**DE-A- 2 636 379**
**US-A- 3 505 288**

EP 0 559 667 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft thermoplastisch verarbeitbare aromatische Polyetheramide mit hoher Wärmeformbeständigkeit, deren Herstellung über Lösungs- oder Schmelzkondensation sowie deren Verwendung zur Herstellung von Formkörpern, Filamenten, Fasern, Folien und Beschichtungen.

Aromatische Polyamide sind eine bekannte Klasse von Hochleistungspolymeren (Comprehensive Polymer Sci. Vol 5, Seite 375 (1989), Encyclopedia of Polymer Science Vol. 11, S. 381 (1986); US-A- 3,063,966; US-A- 3,671,542; GB 1,246,168).

Aromatische Polyamide sind generell hochkristalline, oft nicht unzersetzt schmelzende Polymere mit hohen Glastemperaturen. Sie weisen ausgezeichnete mechanische, thermische und chemische Eigenschaften auf. So besitzt das aromatische Polyamid aus Terephthalsäure und p-Phenylendiamin (Formel 1)

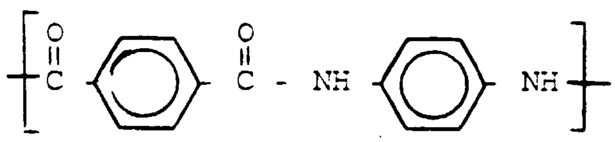

(1)

sehr gute mechanische Eigenschaften, auf Gewichtsbasis vergleichbar mit Stahl.

Ein wesentlicher Nachteil dieser Materialien ist jedoch die sehr schwierige und aufwendige Verarbeitung. Aufgrund der hohen Kristallinität liegt der Schmelzpunkt (ca. 550 °C) weit oberhalb der Zersetzungstemperatur (ca. 350 °C), so daß eine thermoplastische Verarbeitung nach Standardtechniken wie Extrusion oder Spritzguß nicht möglich ist.

Als Methode kommt daher nur die Verarbeitung aus Lösung zu Fasern oder Folien in Frage. Oft sind dazu nur aggressive Medien wie konzentrierte Schwefelsäure, Chlorsulfonsäure oder stickstoffhaltige Lösemittel wie N-Methylpyrrolidon oder Dimethylacetamid mit erheblichen Salzzusätzen (bis zu 6 Gew.-%) verwendbar (DE-A-22 19 703). Der Gehalt an anorganischen Begleitstoffen, bestimmt durch Veraschung, liegt bei diesem Verfahren typischerweise bei mehreren tausend ppm (C.O. Pruneda, R.J. Morgan, R. Lim, J.Gregory, J.W. Fischer, "The Impurities in Kevlar 49 Fibers", SAMPE Journal, Sept./Oct. 1985, 17).

Bessere Löslichkeit läßt sich erreichen durch den Einbau von meta-Verknüpfungen, z.B. durch Reaktion von Isophthalsäurechlorid mit m-Phenylendiamin (US-A-30 63 966). Diese Polyamide (Formel 2)

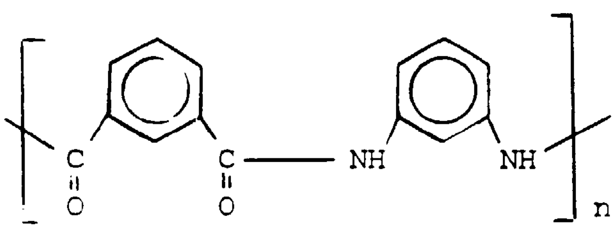

(2)

sind zwar besser löslich, lassen sich aber nicht thermoplastisch verarbeiten.

Für einen breiten Einsatz als polymerer Werkstoff ist die thermoplastische Verarbeitung unabdingbare Voraussetzung.

Amorphe Polymere zeigen in der DSC (Differential Scanning Calorimetry) eine Glastemperatur, die das Einsetzen von kooperativer Kettenbeweglichkeit anzeigt. Kurz oberhalb der Glastemperatur ist jedoch die Viskosität der Schmelze so hoch (> 10 000 Pa·s), daß eine Verarbeitung im Spritzguß oder Extrusion nicht möglich ist. Erst bei weiterer Temperaturerhöhung sinkt die Schmelzviskosität auf Werte, die für diese Verarbeitung notwendig sind. Typischerweise liegt der Verarbeitungsbereich für amorphe Polymere mindestens 100 °C über der Glastemperatur, z.B. Polyethersulfon mit einer Glastemperatur von 225 °C wird bei 340 - 360 °C im Spritzguß verarbeitet.

Teilkristalline Polymere zeigen neben einem Glaspunkt in der DSC einen Schmelz-Peak. Verarbeitung über die Schmelze ist daher nur oberhalb des Schmelzpunktes möglich. Typischerweise liegen die Verarbeitungstemperaturen ca. 10 - 50 °C über dem Schmelzpunkt.

Die erwünschte Abnahme der Schmelzviskosität läßt sich - vor allem bei amorphen Polymeren - durch Temperaturerhöhung erreichen. Dem steht jedoch die begrenzte thermische Stabilität der Polymeren entgegen. Daher lassen sich Polymere durch Temperaturerhöhung zwar oft in den flüssigen Zustand bringen, eine Verarbeitung aus der Schmelze ist damit jedoch nicht implizit verbunden. Für eine praxisnahe Verarbeitung über Spritzguß oder Extrusion ist es notwendig, daß das Material bei der Verarbeitungstemperatur über längere Zeit praktisch keine Änderung der Schmelzviskosität, z.B. durch Abbau oder Vernetzung, erfährt.

Es hat nicht an Versuchen gefehlt schmelzbare Polyamide mit hohen Glastemperaturen und guten mechanischen Eigenschaften (hohe Elastizitätsmodule, gute Reiß- und Durchschlagfestigkeiten), welche ferner eine thermoplastische Verarbeitung nach den Standardtechniken erlauben, herzustellen.

Aromatische Polyamide mit flexibilisierenden Ethergruppierungen im Diaminanteil, die in der Schmelze fließfähig und formbar sind, werden in der DE-A-26 36 379 (US-PS 4,278,786) beschrieben. So liegt die Fließfähigkeit eines aromatischen Polyamids aus Isophthalsäuredichlorid, Terephthalsäurechlorid und 2,2-Bis[4-(4-aminophenoxy)-phenyl]propan, welches eine reduzierte Viskosität von 0,81 dl/g besitzt, bei Temperaturen im Bereich von 250 bis 300 °C unter einer 300 kg Last bei $5{,}6 \cdot 10^{-3}$ $cm^3/s$. Eine Verarbeitung dieser Polymere mit Hilfe von Spritzguß- oder Extrusionstechniken ist bei derartig geringen Fließfähigkeiten jedoch nicht gegeben.

Strukturelle Variationen (Einbau von meta-Verknüpfungen) führen zu keiner Fließfähigkeitserhöhung (DE-A-26 36 379, Beispiele 2, 3, 4, 5; Vergleichsbeispiel E dieser Anmeldung).
Grenzflächenkondensation zur Herstellung derartiger Polyamide führt durch partielle Hydrolyse zu in der Schmelze reaktiven Carboxyl- und Aminogruppen an den Enden der Polymerkette.

Aromatische Polyamide und Polyarylate, die sich aus der Schmelze verarbeiten lassen, werden in der EP-A-263593 beschrieben. Als Säurekomponente wird 5-tert.-Butylisophthalsäure eingesetzt. Der Nachteil der hier beschriebenen Materialien liegt hauptsächlich in ihrer ungenügenden Temperaturbeständigkeit, da die aliphatische Seitenkette bei höheren Temperaturen zu Nebenreaktionen neigt, was zu einer drastischen Schmelzviskositätsänderung führt.

Ferner sind thermoplastisch verarbeitbare aromatische Polyetheramide bekannt, welche beispielsweise zu Platten verpreßt oder ramextrudiert werden können (DE-A-38 18 206 (US-Serial No. 357527), DE-A-38 18 209 (US-Serial No. 358180). Die Lösungskondensation des aromatischen Dicarbonsäurechlorids mit dem aromatischen Diamin erfolgt unter Einsatz äquimolarer Mengen in aprotischen, polaren Lösungsmitteln vom Amidtyp. Zur Molekulargewichtsbegrenzung werden bereits während des Polymerisationsvorganges, d.h. in Gegenwart des Disäurechlorids, Kettenabbruchsmittel, z.B. monofunktionelle Amine oder Benzoylchlorid, zugegeben.

Auf diese Weise kommt es zur vorzeitigen Beendigung des Polymerisationsvorganges, wobei nur die Hälfte der Endgruppen mit dem Abbruchsmittel reagiert und die andere Hälfte reaktiv bleibt. Ein vergleichbarer Effekt tritt auf, wenn ein oder zwei verschiedene Abbruchsreagenzien nach Erreichen des experimentell maximal möglichen Molekulargewichts zugegeben werden (Vergleichsbeispiel C dieser Anmeldung).

Die intrinsischen Viskositäten dieser Polymere liegen in einem Bereich von 1,5 bis 4 dl/g, was Schmelzviskositäten von über 10 000 Pa·s unterhalb Zersetzungstemperatur entspricht. Daher ist auch hier eine Verarbeitung über Spritzguß oder Extrusion nicht möglich (siehe Vergleichsbeispiel B dieser Anmeldung).

Der Erfindung liegt die Aufgabe zugrunde, thermoplastische aromatische Polyetheramide zu entwickeln, die sich über Spritzguß- oder Extrusionsverfahren verarbeiten lassen und die gute mechanische Eigenschaften aufweisen.

Ziel der vorliegenden Erfindung ist es daher, aromatische Polyamide mit hoher Glastemperatur und ausgezeichneten mechanischen Eigenschaften aus günstigen Ausgangskomponenten bereitzustellen, die sich thermoplastisch verarbeiten lassen, mit der Maßgabe, daß die aromatischen Polyamide stabile Schmelzen bilden, Schmelzviskositäten von weniger als 10 000 Pa·s unterhalb Zersetzungstemperatur aufweisen und sich durch Spitzguß oder Extrusion verarbeiten lassen.

Ein weiteres Ziel der vorliegenden Erfindung ist, ein Verfahren zur Herstellung von aromatischen Polyamiden bereitzustellen, das zu Produkten mit reproduzierbarem Molekulargewicht und stabilem Schmelzviskositätsverhalten führt.

Ein weiteres Ziel der vorliegenden Erfindung ist, ein Verfahren zur Formung von Fäden, Fasern, Folien und Formteilen über thermoplastische Verfahren, vorzugsweise Spritzguß oder Extrusion, bereitzustellen.

Die Erfindung betrifft ein thermoplastisch verarbeitbares aromatisches Polyetheramid der Formel (I)

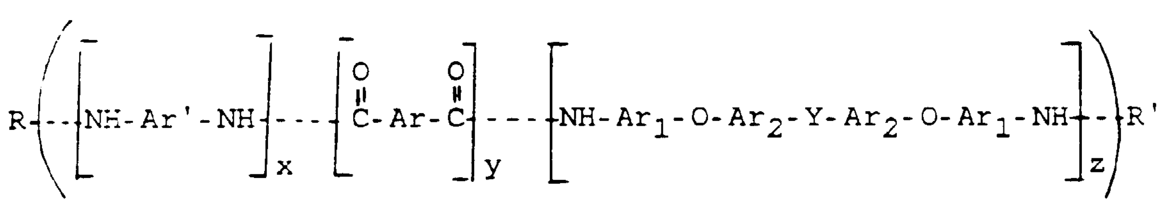

worin die Symbole Ar, Ar', $Ar_1$, $Ar_2$, R, R', Y, x, y und z folgende Bedeutungen haben:
Ar bedeutet einen zweiwertigen, substituierten oder unsubstituierten, aromatischen oder heteroaromatischen Rest oder eine Gruppe

-Ar*-Q-Ar*-

worin

Q für eine Bindung oder eine -O-, $-C(CH_3)_2$, -CO-, -S-, -SO- oder $-SO_2$-Brücke und Ar* für einen aromatischen Rest steht; die Carbonylgruppen des Ar-Restes befinden sich an nicht benachbarten Ringkohlenstoffatomen (z. B. in para- oder meta-Stellung). Dieser ist gegebenenfalls mit einem oder zwei verzweigten oder unverzweigten $C_1$-$C_3$-Alkyl- oder Alkoxyresten, Aryl- oder Aryloxyresten oder $C_1$-$C_6$-Perfluoralkyl- oder Perfluoralkoxyresten oder mit Fluor-, Chlor-, Brom- oder Jodatomen substituiert sein, wobei Ar bis zu drei verschiedene Reste bedeutet;

Ar und Ar' sind unabhängig voneinander und sind gleich oder verschieden, wobei Ar' die für Ar angegebene Bedeutung hat oder eine Gruppe Ar-Z-Ar darstellt. Z steht in diesem Fall für eine $-C(CH_3)_2$- oder -O-Ar*-O Brücke.

Y stellt eine $-C(CH_3)_2$-, -CO-, $-SO_2$-, -S- oder eine $-C(CF_3)_2$- Brücke dar, wobei Y im gleichen Polymer gleichzeitig bis zu zwei verschiedene Bedeutungen hat;

$Ar_1$ und $Ar_2$ sind gleich oder verschieden voneinander und stehen jeweils für einen substituierten oder unsubstituierten para- oder meta-Arylenrest, beispielsweise meta- oder para-Phenylen, wobei $Ar_2$ vorzugsweise für einen para-Phenylenrest steht.

Die Summe der Molenbrüche (molaren Anteile) x, y und z ist eins, die Summe von x und z darf aber nicht gleich y sein und x kann den Wert Null annehmen. In einer bevorzugten Ausführung ist z größer als x. Die Molekulargewichtskontrolle erfolgt durch nichtstöchiometrische Zugabe der Monomere.

Nach Abschluß der Polykondensationsreaktion werden die Enden der Polymerkette durch Zugabe von monofunktionellen Reagenzien, in mindestens stöchiometrischen Mengen, die im Polymer zu nicht weiterreagierenden Gruppen R und R' reagieren, vollständig verschlossen. Die Endgruppen R und R' sind dabei unabhängig voneinander und gleich oder verschieden, vorzugsweise gleich, und werden aus einer Gruppe der Formeln V, VI, VII und/oder VIII ausgewählt.

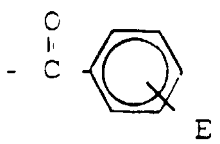 , 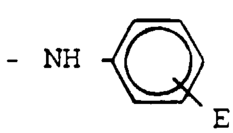 , 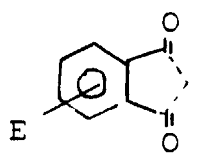 , 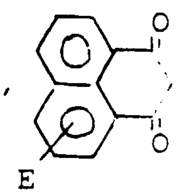

(V) (VI) (VII) (VIII)

Für den Fall der Endgruppen VII und/oder VIII ist der terminale Stickstoff in Formel (I) ein Imidstickstoff.

E stellt in den oben angegebenen Formeln ein Wasserstoff- oder ein Halogenatom, insbesondere ein Chlor-, Brom- oder Fluoratom, oder einen organischen Rest, beispielsweise eine Aryl(oxy)gruppe, dar.

Das erfindungsgemäße aromatische Polyetheramid, bei dem die Struktur aus den wiederkehrenden Einheiten

$$- CO - Ar - CO - \qquad (II)$$

$$- NH - Ar' - NH - \qquad (III)$$

$$- NH - Ar_1 - O - Ar_2 - Y - Ar_2 - O - Ar_1 - NH - \qquad (IV)$$

besteht, wobei Ar, Ar', $Ar_1$, $Ar_2$ und Y die oben angegebene Bedeutung haben, wird durch Umsetzung von ein oder mehreren Dicarbonsäurederivaten mit einem oder mehreren Diaminen nach dem Lösungs- oder Schmelzkondensationsverfahren hergestellt, wobei eine der Komponenten im stöchiometrischen Unterschuß eingesetzt wird und nach Beendigung der Polykondensation ein Kettenverschlußmittel zugegeben wird. In einem bevorzugten Fall werden jeweils bis zu drei verschiedene Einheiten der Formeln (II), (III) und/oder (IV) zur Herstellung der erfindungsgemäßen Polyetheramide eingesetzt. Es wurde gefunden, daß sich thermoplastische aromatische Polyetheramide, die sehr gute

mechanischen Eigenschaften besitzen über konventionelle Verfahren, wie beispielsweise Extrusion oder Spritzguß, verarbeiten lassen, wenn

a) das Molekulargewicht durch Verwendung nicht stöchiometrischer Mengen der Monomeren gezielt kontrolliert wird,

b) die Enden der Polymerkette durch monofunktionelle, im Polymer nicht weiter reagierende Verbindungen vollständig verschlossen werden, und vorzugsweise

c) der Gehalt an anorganischen Verunreinigungen im Polymer nach der Aufarbeitung und Isolierung 500 ppm nicht übersteigt.

Die nach dem erfindungsgemäßen Verfahren hergestellten thermoplastischen aromatischen Polyamide zeichnen sich ferner dadurch aus, daß diese ein mittleres Molekulargewicht Mn im Bereich von 5000 bis 50000 (Mn = absolutes Zahlenmittel) und eine niedrige Schmelzviskosität, die 10 000 Pa·s bei Verarbeitungstemperatur nicht überschreitet, aufweisen.

Die Verarbeitung zu Formteilen, Folien und Drähten oder auch zu Beschichtungen erfolgt aus Lösung oder Schmelze, die über die üblichen Polykondensationsprozesse hergestellt wurden, bevorzugt aber über die Schmelz- oder Lösungspolykondensation.

Zur Herstellung der Polyetheramide gemäß der Erfindung eignen sich folgende Verbindungen:
Dicarbonsäurederivate der Formel ( IX )

$$W - CO - Ar - CO - W \quad (IX)$$

wobei Ar die oben angegebene Bedeutung hat und W ein Fluor-, Chlor-, Brom- oder Jodatom, bevorzugt ein Chloratom, oder eine -OH oder OR" Gruppe, wobei R" ein verzweigter oder unverzweigter aliphatischer oder aromatischer Rest ist, darstellt.

Beispiele für Verbindungen der Formel ( IX ) sind:

Terephthalsäure
Terephthalsäuredichlorid
Terephthalsäurediphenylester
Isophthalsäure
Isophthalsäurediphenylester
Isophthalsäurechlorid
Phenoxyterephthalsäure
Phenoxyterephthalsäuredichlorid
Phenoxyterephthalsäurediphenylester
Bis(n-hexyloxy)terephthalsäure
Bis-(n-hexyloxy)terepthalsäuredichlorid
Bis-(n-hexyloxy)terephthalsäurediphenylester
2,5-Furandicarbonsäure
2,5-Furandicarbonsäurechlorid
2,5-Furandicarbonsäurediphenylester entsprechend auch die Dicarbonsäuredichloride und -diphenylester von
Thiophendicarbonsäure
Naphthalin-2,6-dicarbonsäure
Diphenylether-4,4'-dicarbonsäure,
Benzophenon-4,4'-dicarbonsäure
Isopropyliden-4,4'-dibenzoesäure
Diphenylsulfon-4,4'-dicarbonsäure
Tetraphenylthiophen-dicarbonsäure
Diphenylsulfoxid-4,4'-dicarbonsäure
Diphenylthioether-4,4'-dicarbonsäure
Trimethylphenylindandicarbonsäure

Als aromatische Diamine der Formel ( X)

$$H_2N - Ar' - NH_2 \quad (X)$$

in der Ar'- die oben angegebene Bedeutung hat, eignen sich vorzugsweise folgende Verbindungen:

m-Phenylendiamin
p-Phenylendiamin
2,4-Dichlor-p-phenylendiamin
Diaminopyridin
Bis(aminophenoxy)benzol
1,4-Bis(4-aminophenoxy)benzol
1,3-Bis(4-aminophenoxy)benzol
1,4-Bis(3-aminophenoxy)benzol
1,3-Bis(3-aminophenoxy)benzol
1,2-Bis(4-aminophenoxy)benzol
1,2-Bis(3-aminophenoxy)benzol
2,6-Bis(aminophenoxy)pyridin
3,3'-Dimethylbenzidin
4,4'- und 3,4'-Diaminodiphenylether
Isopropyliden-4,4'-dianilin
p,p'- und m,m'-Bis(4-aminophenylisopropyliden)benzol
4,4'- und 3,3'-Diaminobenzophenon
4,4'- und 3,3'-Diaminodiphenylsulfon
Bis(2-amino-3-methylbenzo)thiophen-S,S-dioxid

Als aromatische Diamine kommen ferner solche der Formel (XI) in Betracht

$$H_2N - Ar_1 - O - Ar_2 - Y - Ar_2 - O - Ar_1 - NH_2 \quad (XI)$$

wobei $Ar_1$, $Ar_2$ und Y die oben angegebene Bedeutung haben.

Als aromatische Diamin der Formel (X) kommen in Betracht:

2,2-Bis-[4-(3-trifluormethyl-4-aminophenoxy)phenyl]propan
Bis-[4-(4-aminophenoxy)phenyl]sulfid
Bis-[4-(3-aminophenoxy)phenyl]sulfid
Bis-[4-(3-aminophenoxy)phenyl]sulfon
Bis-[4-(4-aminophenoxy)phenyl]sulfon
2,2-Bis-[4-(4-aminophenoxy)phenyl]propan
2,2-Bis-[4-(3-aminophenoxy)phenyl]propan
2,2-Bis-[4-(2-aminophenoxy)phenyl]propan
1,1,1,3,3,3-Hexafluor-2,2-bis-[4-(4-aminophenoxy)phenyl] propan.

Die Herstellung der erfindungsgemäßen Polyetheramide erfolgt bevorzugt über Lösungskondensationsprozesse.

Die Lösungskondensation des aromatischen Dicarbonsäuredichlorids mit den aromatischen Diaminen erfolgt in aprotischen, polaren Lösungsmitteln vom Amidtyp, z.B. N,N-Dimethyl-acetamid, vorzugsweise in N-Methyl-2-pyrrolidon. Gegebenenfalls werden diesen Lösungsmitteln in bekannter Weise zur Erhöhung der Lösefähigkeit, bzw. zur Stabilisierung der Polyetheramidlösungen, Halogenidsalze von Metallen der ersten und/oder zweiten Gruppe des periodischen Systems der Elemente zugesetzt. Bevorzugte Zusätze sind Calciumchlorid und/oder Lithiumchlorid. In einer bevorzugten Ausführungsform wird die Kondensation ohne Salzzusatz durchgeführt, da sich die oben beschriebenen aromatischen Polyamide durch eine hohe Löslichkeit in den obengenannten Lösungsmitteln des Amidtyps auszeichnen.

Im Gegensatz zu den bisher bekannten Polyaramidstrukturen wurde bei dem erfindungsgemäßen Polyaramiden nun gefunden, daß sich schmelzbare Polyetheramide mit guten mechanischen Eigenschaften-, die sich insbesondere durch hohe Elastizitätsmodule und gute Reiß- und Durchslagsfestigkeiten auszeichnen und eine thermoplastische Verarbeitung nach den Standardmethoden erlauben, herstellen lassen, wenn mindestens eine der Ausgangskomponenten im stöchiometrischen Unterschuß eingesetzt wird. Auf diese Weise ist es möglich eine Begrenzung des Molekulargewichtes entsprechend der bekannten Carothers Gleichung zu erreichen:

$$\bar{P}_n = \frac{1 + q}{1 - q}$$

wobei $q \neq 1$ und gleichzeitig $q = \frac{Y}{x + z}$ ist.

$P_n$ = Polymerisationsgrad
q = Molverhältnis der Disäurekomponenten zu Diaminkomponenten

Beim Arbeiten mit einem Unterschuß an Säuredichlorid wird am Ende der Polyreaktion als Kettenverschlußmittel ein monofunktionelles aromatisches Säurechlorid oder Säureanhydrid zugegeben, beispielsweise

Benzoylchlorid, Fluorbenzoylchlorid
Diphenylcarbonsäurechlorid, Phenoxybenzoylchlorid
Phthalsäureanhydrid, Naphthalsäureanhydrid,
4-Chlornaphthalsäureanhydrid.

Derartige Kettenverschlußmittel können gegebenenfalls substituiert sein, vorzugsweise mit Fluor- oder Chloratomem. Bevorzugt wird Benzoylchlorid oder Phthalsäureanhydrid, besonders bevorzugt Benzoylchlorid, eingesetzt.

Wird mit einem Unterschuß an Diaminkomponente gearbeitet, so wird nach Ende der Polykondensation als Kettenverschlußmittel ein monofunktionelles, vorzugsweise aromatisches Amin eingesetzt, beispielsweise Fluoranilin, Chloranilin, 4-Aminodiphenylamin, Aminobiphenylamin, Aminodiphenylether, Aminobenzophenon oder Aminochinolin.

In einer besonders bevorzugten Ausführungsform des Polykondensationsverfahrens wird Disäurechlorid im Unterschuß mit Diamin polykondensiert, und anschließend werden die verbliebenen reaktiven Aminogruppen mit einem monofunktionellen Säurechlorid oder Disäureanhydrid desaktiviert.

In einer weiteren bevorzugten Ausführungsform wird das Disäurechlorid im Unterschuß eingesetzt und mit einem Diamin polykondensiert. Anschließend werden mit einem monofunktionellen, vorzugsweise aromatischen, gegebenenfalls substituierten Säurechlorid oder Säureanhydrid, die verbliebenen reaktiven Aminoendgruppen desaktiviert.

Das Kettenverschlußmittel, monofunktionelles Amin bzw. Säurechlorid oder Säureanhydrid, wird dabei bevorzugt in einer stöchiometrischen oder überstöchiometrischen Menge, bezogen auf die Disäure- bzw. Diaminkomponente, eingesetzt.

Zur Herstellung der erfindungsgemäßen aromatischen Polyamide wird das Mol-Verhältnis q (Säurekomponenten zu Diaminkomponenten) im Bereich von 0,90 bis 0,98 und 1,02 bis 1,07 variiert, wobei exakte Stöchiometrie (q = 1) der bifunktionellen Komponenten ausgeschlossen ist. Besonders bevorzugt liegt das Mol-Verhältnis im Bereich von 0,93 bis 0,98 und 1,02 bis 1,07, insbesondere im Bereich von 0,95 bis 0,97 und 1,03 bis 1,05.

Die Polykondensationstemperaturen liegen üblicherweise im Bereich von -20 bis +120 °C, bevorzugt von +10 bis +100 °C.

Besonders gute Ergebnisse werden bei Reaktionstemperaturen von +10 bis + 80 °C erzielt. Die Polykondensationsreaktionen werden vorzugsweise so ausgeführt, daß nach Abschluß der Reaktion 2 bis 40, vorzugsweise 5 bis 30 Gew.-% an Polykondensat in der Lösung vorliegen. Für spezielle Anwendungen kann die Lösung bei Bedarf mit N-Methyl-2-pyrrolidon oder anderen Lösungsmitteln, beispielsweise Dimethylformid, N,N-Dimethylacetamid oder Butylcellosolve, verdünnt werden oder unter vermindertem Druck konzentriert werden (Dünnschichtverdampfer).

Nach Beendigung der Polykondensation wird der entstandene, locker an das Amidlösungsmittel gebundene Chlorwasserstoff durch Zugabe säurebindender Hilfsstoffe entfernt. Geeignet sind dafür beispielsweise Lithiumhydroxyd, Calciumhydroxyd, insbesondere aber Calciumoxid, Propylenoxid, Ethylenoxid oder Ammoniak. In einer besonderen Ausführungsform wird als "säurebindendes" Mittel reines Wasser verwendet, welches die Salzsäure verdünnt und gleichzeitig zur Ausfällung des Polymeren dient. Zur Herstellung von geformten Gebilden gemäß der vorliegenden Erfindung werden die oben beschriebenen erfindungsgemäßen Copolyamidlösungen filtriert, entgast und in bekannter und im folgenden geschilderter Weise weiterverarbeitet.

Gegebenenfalls werden den Lösungen noch geeignete Mengen an Additiven zugesetzt. Beispiele sind Lichtstabilisatoren, Antioxidationsmittel, Flammschutzmittel, Antistatika, Farbstoffe, Farbpigmente, Füllstoffe oder Polymere wie z.B. Polytetrafluorethylen.

Zur Isolierung des Polyetheramids kann die Lösung mit einem Fällungsmittel versetzt und das koagulierte Produkt abfiltriert werden. Typische Fällungsmittel sind beispielsweise Wasser, Methanol, Aceton, die gegebenenfalls auch pH-kontrollierende Zusätze wie z.B. Ammoniak oder Essigsäure enthalten können.

Bevorzugt erfolgt die Isolierung durch Zerkleinern der Polymerlösung mit einem Überschuß an Wasser in einer Schneidmühle. Die fein zerkleinerten koagulierten Polymerteilchen erleichtern die nachfolgenden Waschschritte (Entfernen der aus dem Chlorwasserstoff gebildeten Folgeprodukte) und die Trocknung des Polymeren (Vermeiden von Einschlüssen) nach Abfiltration. Auch eine nachträgliche Zerkleinerung erübrigt sich, da direkt ein rieselfähiges Produkt entsteht.

Außer der beschriebenen Lösungskondensation, die als leicht zugängliches Verfahren gilt, können wie bereits erwähnt, auch andere übliche Verfahren zur Herstellung von Polyamiden, wie beispielsweise Schmelz-, oder Feststoffkondensation, angewendet werden. Diese Verfahren können neben der Kondensation unter Regelung der Molmasse auch Reinigungs- oder Waschschritte sowie den Zusatz geeigneter Additive beinhalten. Die Additive können darüber hinaus auch nachträglich dem isolierten Polymer bei der thermoplastischen Verarbeitung zugesetzt werden.

Die aromatischen Polyamide entsprechend der Erfindung besitzen überraschend gute mechanische Eigenschaften und hohe Glastemperaturen.

Der Staudingerindex $[\eta]_o$ liegt im Bereich von 0,4 bis 1,5 dl/g, bevorzugt im Bereich von 0,5 bis 1,3 dl/g, besonders bevorzugt im Bereich von 0,6 bis 1,1 dl/g. Die Glastemperaturen liegen im allgemeinen über 180 °C, bevorzugt über 200 °C, die Verarbeitungstemperaturen im Bereich von 320 bis 380 °C, bevorzugt im Bereich von 330 bis 370 °C, besonders bevorzugt im Bereich von 340 bis 360 °C.

Die Verarbeitung der erfindungsgemäßen Polyamide kann über Spritzguß- oder Extrusionsprozesse erfolgen, da die Schmelzviskositäten 10 000 Pa·s bei Verarbeitungstemperatur nicht überschreiten.

Als geeignete Apparaturen kommen herkömmliche Spritzgußmaschinen mit Schließkräften von 60 bis 120 t und Spritzdrücken von 1000 bis 2000 bar in Frage. Die Extrusion kann auf üblichen Ein- oder Zweischneckenextrudern erfolgen.

Die erfindungsgemäßen Polyetheramide eignen sich zur Herstellung einer Vielzahl von Formteilen wie Lagerteile, Dichtungen, Verschlüsse, Clips, elektrische Isolatoren, elektrische Stecker, Gehäuse für elektrische Teile, Karosserieteile im Kraftfahrzeugbau, Kolben, Zahnräder, Turbinenflügel, Laufräder, Fadenführungen, Steuerwellen, Bremsbeläge, Kupplungsscheiben.

Fäden, Fasern oder Pulp aus den erfindungsgemäßen Copolyetheramiden können beispielsweise als Verstärkungsmaterialien für Gummi, thermoplastische Kunststoffe oder wärmehärtende Harze, zur Herstellung von Filtergeweben oder als leichter Dämmstoff verwendet werden. Durch Zusatz gasliefernder Zusätze lassen sich hochtemperaturfeste Schäume erzeugen.

Folien und Papier eigenen sich als hitzebeständiges Isolationsmaterial; Folien insbesondere als Substrat für flexible Leiterplatten und für den Einsatz im Bereich der Datenverarbeitung.

Die Polyetheramide gemäß der Erfindung bzw. die daraus hergestellten Formteile sind nach folgenden Test-Methoden geprüft worden:

Staudingerindex $[\eta]_o$

Der Staudingerindex $[\eta]_o$ ist nach Gleichung 1 definiert:

$$[\eta]_o = \lim_{c_2 \to 0} \frac{(\eta/\eta_1) - 1}{c_2} \quad , \text{(Gl. 1)}$$

wobei $\eta$ und $\eta_1$ die Viskositäten der Lösung bzw. des Lösungsmittels und $c_2$ die Konzentration des Polymers bedeuten. Gemessen wurde in N-Methyl-pyrrolidon bei 25 °C.

Mechanische Eigenschaften

Reißfestigkeit, Reißdehnung, Streckspannung, Streckdehnung und Elastizitätsmodul (E-Modul) wurden mit Hilfe von Zug-Dehnungs-Geräten der Marke Instron bei 23 °C und 50 % relativer Luftfeuchte bestimmt.

Beispiele

Bei den Beispielen wurden folgende Abkürzungen verwendet

BAB = 2,2-Bis-[4-(4-aminophenoxy)phenyl]propan

TPC = Terephthaloylchlorid

IPC = Isophthaloylchlorid

FDC = 2,5-Furandicarbonsäurechlorid

FBC = 4-Fluorbenzoylchlorid

BCl = Benzoylchlorid

NMP = N-Methylpyrrolidon

CaO = Calciumoxid

E-Modul = Elastizitätsmodul

MFI = Melt Flow Index (Schmelzflußindex)

DSC = Differential Scanning Calorimetry (Dynamische Thermoanalyse)

$M_w$ = Gewichtsmittel der mittleren Molmasse

$M_n$ = Zahlenmittel der mittleren Molmasse

$D=M_w/M_n$ = Polydispersität, Uneinheitlichkeit, Molmassenverteilung

TGA = Thermogravimetrische Analyse

$T_g$ = Glasübergangstemperatur (bestimmt als Wendepunkt der Glasstufe in der DSC)

PS = Polystyrol, M(PS)=apparente Molmasse ermittelt in der GPC relativ zu Polystyrol

PO = 1,2-Propylenoxid

BAPS = Bis[4-(4-aminophenoxy)phenyl]sulfon

GPC = Gelpermeationschromatographie

PSA = Phthalsäureanhydrid

E-Wasser = Entionisiertes Wasser

UL 94 = Underwriters Laboratories (USA) Bulletin 94 (Prüfnorm für Brennbarkeit)

MH = Mark-Houwink Gleichung: $[\eta]_o = k \cdot M_w^a$

$[\eta]_o$ = Staudingerindex, Einheit dl/g

$\eta_m$ = Schmelzviskosität, Einheit Pa.s

DMF = Dimethylformamid

DMAC = N,N-Dimethylacetamid

Beispiel 1

Polyetheraramid aus 2,2-Bis-[4-(4-aminophenoxy)phenyl]propan, Terephthalsäure und Benzoylchlorid in N-Methylpyrrolidon:

In einem emaillierten 40 l-Rührkessel mit Heizmantel wurden unter Stickstoff 4105 g (10 mol) BAS in 15,24 1 NMP

gelöst. Nach Temperierung auf 25 °C wurden 1959 g (9,65 mol = 96,5 %) TPC gelöst in 5 l NMP zugegeben. 30 Min. nach Erreichen von 70 °C wurden 112,5 g (0,8 mol) BCl zugesetzt, weitere 30 Min. später auf 60 °C gekühlt und 566 g (10,1 mol) CaO als Suspension in 305 g NMP zugesetzt. Nach 1 h wurde die klare, viskose Lösung abgelassen, mit ca. 13 l NMP von 20 % auf ca. 13 % Polymergehalt verdünnt, unter 3 bar $N_2$-Druck filtriert und schließlich mit Wasser als feines Pulver (Korngröße ≤ 1 mm) gefällt. In einer Rührdrucknutsche wurde das Polymerpulver viermal jeweils 2 h mit 60 l frischem E-Wasser bei 95 - 98 °C gewaschen, im heißen Stickstoffstrom grob getrocknet und noch zweimal mit 60 l Aceton (2 h, 60 °C) gewaschen. Uber Nacht wurde im Stickstoffstrom vorgetrocknet, anschließend 14 h bei 130 °C (100 mbar) und zuletzt 8 h bei 150 °C (< 10 mbar) fein-getrocknet. Ausbeute 5,0 kg (93 %). $[\eta]_o$ = 1,06 dl/g; $M_W$ = 40.000 g·$mol^{-1}$ Aschegehalt: 200 ppm; GPC: $M_w$ (PS) = 49.000 g·$mol^{-1}$, $M_n$ (PS) = 50.000, D = 2,1.
Die Schmelzestabilität wurde im Knetversuch überprüft (Fig. 1).

Das freifließende Polymerpulver wurde unter Argonschutzgasatmosphäre in einem Zweischneckenextruder (Haake Rheocord System 90 mit Doppelschneckenextruder TW 100 und Düsendurchmesser 1 mm) mit der Temperaturzoneneinstellung 310/320/330/340 °C, wobei die letzte Angabe der Düsentemperatur entspricht, und einer Massetemperatur von 360 °C zu einem 2 mm-Schmelzestrang geformt, der nach Granulierung und erneutem Feintrocknen (150 °C, < 10 mbar, 8h) spritzgegossen wurde.

Gerät und Bedingungen: KRAUSS MAFFEI 90/340 A, Schließkraft 900 kN, Schneckendurchmesser 35 (20D), Düsentemp. 350 °C, Werkzeugtemp. 180 °C, Spritzdruck 1500 bar (4 s), Nachdruck 1200 bar (12 s), Gesamtcycluszeit 35 s.

An den erhaltenen Formkörpern wurden folgende Eigenschaften gemessen:

Dichte:1,22 g.$cm^{-3}$
Wasseraufnahme: 2,3 % (23°C, 85 % rel. Luftfeuchte)
Reißdehnung: 6 %
Zug-E-Modul: 3,4 GPa (Zugstab Nr. 3, DIN 53 455)
Biege-E-Modul: 3,2 GPa
Kerbschlagzähigkeit: 83 J/m
Schlagzähigkeit: 281 J/m
Kugeldruckhärte: 162 Pa
MFI (340 °C, 10 kg): 15 ccm/10 Min.
Tg = 210 °C (DSC)
Brennbarkeit (UL-94): V-O (0,8 mm), d.h. günstigste Brennbarkeitsklasse, bereits ohne Flammschutzadditive

Vergleichsbeispiel A

Polyetheraramid aus BAB und TPC ohne Zugabe von BCl:

314,1 g (0,7651 mol) BAB wurden unter Stickstoff in 1.264 g trockenem NMP gelöst. Nach Abkühlung auf -10 °C wurden 155,5 g (0,7659 mol) TPC unter Rühren zugegeben. Es wurde eine Stunde bei -10 °C weitergerührt, dann das Kältebad entfernt und nach Erreichen der Raumtemperatur noch weitere 3 h gerührt. Zur viskosen Polymerlösung wurden 766 g DMF zugesetzt und unter Rühren homogenisiert. Das Polymere wurde unter Rühren in einem Fällbad aus 5 kg Ethanol und 20 l Wasser ausgefällt, abfiltriert und mehrmals mit heißem E-Wasser intensiv gewaschen. Das farblose Polymere wurde intensiv getrocknet, zuletzt 8 h bei 120 °C im Vakuum, (< 10 mbar). Der Staudinger-Index betrug $[\eta]_o$ = 2,45 dl/$g^{-1}$ entsprechend $M_w$ = 170.000 g.$mol^{-1}$. GPC: $M_n$ (PS) = 189.000 g/mol; D=6,1.
Aschegehalt: 2.700 ppm
Im Knetversuch unter Argon-Schutzgasatmosphäre wurden 60 g bei 360 °C untersucht. Das Drehmoment fällt nach 3 min auf 10 % des Maximalwerts ab (Fig. 2). Nach 6 min ist das Drehmoment praktisch auf Null abgesunken. Nach 30 min wurde eine schwarz-braune, brüchige Masse entnommen, die keine Anzeichen eines Schmelzprozesses aufwiesen.

Vergleichsbeispiel B

Polyetheramid aus BAB und TPC ohne Zugabe von Benzoylchlorid (BCl)

164,21 g (0,4 mol) BAB wurden unter Stickstoff in 2.193 g NMP gelöst und zwischen 15 und 70 °C innerhalb von ca. 60 Min. 81,21 g (0,4 mol) TPC zugegeben. Die viskose und klare Lösung wurde noch ca. 40 Min. lang bei 70 °C nachgerührt und dann mit 24,54 g (0,438 mol, 96 %ig) CaO neutralisiert und weitere 30 Min. bei 70 °C nachgerührt. Die Lösung wurde filtriert und in einer Schneidmühle (Hersteller: Condux) unter Zugabe von Wasser koaguliert und zerkleinert. Das ausgefällte Polymer wurde fünfmal mit entsalztem Wasser und dann zweimal mit Aceton gewaschen.

Die Trocknung erfolgte bei 130 °C im Vakuum bei 50 - 80 mbar unter leichter Stickstoff-Überlagerung. Staudingerindex $[\eta]_o$ = 4,2 dl/g, Mw = 400.000 $g.mol^{-1}$

Aschegehalt: 3.200 ppm
DSC: Glasübergangstemperatur Tg = 230 °C,
TGA: deutlicher Gewichtsverlust bei 400 °C.

Im Knetversuchen unter Argon-Schutzgasatmosphäre bei 340 °C, 350 °C bzw. 360 °C wurden jeweils wenige Minuten nach dem vollständigen Einfüllen von jeweils 60 g eine schwarz-braune, porös-spröde Masse entnommen, die keine sichtbaren Spuren eines Schmelzvorgangs aufwies.

Beispiel 2 - 7

Auf analoge Weise wie in Beispiel 1 wurden

4105 g (10 mol) BAB mit
1949 (9,6 mol= 96 %) TPC bzw. Isophthalsäurechlorid und
126,5 g (0,9 mol) BCl in
20,8 kg NMP umgesetzt:

| Bsp. | Verhältnis TPC/IPC | Staudinger-Index $[\eta]_o$/dl/g | aus GPC $M_n$ (PS) | D | $M_w$ aus MH | $T_g$ b) /°C |
|---|---|---|---|---|---|---|
| 2 | 1/0 | 0,86 | 39.000 | 2,1 | 36.000 | 227 |
| 3 | 8/2 | 0,69 | 34.000 | 2,2 | 26.000 | 221 |
| 4 | 7/3 | 0,68 | 32.000 | 2,2 | 25.000 | 224 |
| 5 | 6/4 | 0,68 | 36.000 | 2,1 | 25.000 | 222 |
| 6 | 5/5 | 0,68 | 35.000 | 2,0 | 25.000 | 226 |
| 7 a) | 7/3 | 0,80 | 44.000 | 2,0 | 32.000 | 227 |

a) Bsp. 7 wie Bsp. 4, jedoch TPC/BAB = 965/1000 (Molverhältnis)

b) Die Polymeren 3-7 sind röntgenamorph.

Extrudiert wurde auf einem Extruder der Marke Leistritz (Typ LSM 30.34 GH) unter den unten angegebenen Bedingungen (40 Upm). Spritzguß, wie im Beispiel 1 angegeben, ergab folgende mechanische Eigenschaften:

| Bsp. | Masse-Temp. Düse/°C | Staudruck/ bar | Durchsatz kg/h | MFI[a)] 340 °C 5 kg | E-Modul/ GPa | Reißdehnung/% | Reißspann./ MPa | Streck- Dehn. % | Streck- Spann./ MPa | Kerbschlagzähigkeit/ mJ |
|---|---|---|---|---|---|---|---|---|---|---|
| 2 | 336 | 45 | 1,9 | 4 | 2,6 | 6 | 87 | | | 81/J/m[b)] |
| 3 | 339 | 15 | 1,7 | 6 | 2,5 | 21 | 76 | 9 | 86 | 220 |
| 4 | 331 | 30 | 2,3 | 7 | 2,5 | | 64 | | | 210 |
| 5 | 334 | 30 | 2,4 | 8 | 2,4 | | 74 | | | 210 |
| 6 | 335 | 35 | 3,1 | 11 | 2,5 | | 78 | | | 200 |
| 7 | 335 | 30 | 2,3 | 4 | 2,5 | 27 | 75 | 8 | 89 | 200 |

a) Schmelzflußindex in dg/min

b) Schlagzähigkeit 281 J/m

Die Lösungsmittelresistenz wurde an einem Normprüfkörper (Nr. 3) überprüft. Nach 10 Tagen Lagerung in Chloroform hatte der Probenkörper 5,7 Gew.-% des Lösemittels aufgenommen. Die Reißspannung erhöhte sich auf 81 MPa, während die anderen mechanischen Eigenschaften unverändert blieben.

Beispiel 8

Polyetheraramid aus BAB, TPC, 4-Fluorbenzoylchlorid und 1,2-Propylenoxid in NMP:

246,3 g (0,6 mol) BAB wurden unter Stickstoff in 1615 g trockenem NMP gelöst. Bei 10 °C wurden 118,16 g (0,582 mol = 97 %) TPC zugesetzt. Nach Erwärmen auf 50 °C (ca. 0,5 h) wurden 5,7 g (36 mmol = 6 %) FBC zugesetzt. 40 Min. später wurde über einen Tropftrichter eine Mischung aus 73,2 g (1,26 mol) PO und 88 g NMP zugetropft. Nach Filtration wurde in entsalztem Wasser (E-Wasser) ausgefällt, mehrmals mit heißem, E-Wasser und anschließend mehrmals mit Aceton ausgewaschen. Nach Vortrocknung bei ca. 100 mbar wurde zuletzt 8 h bei 150 °C und < 10 mbar getrocknet.
Aschegehalt: 460 ppm.

Beispiel 9

287,4 g (0,7 mol) BAS wurden unter Stickstoff in 1708 g trockenem NMP gelöst. Bei 3 °C wurden 139,27 g (0,686 mol = 98 %) TPC zugesetzt. Nach Erwärmen auf 50 °C wurden 5,6 g (35 mmol = 5 %) FBC zugesetzt. 1 h später wurden über einen Tropftrichter eine Mischung aus 85,4 g (1,47 mol) PO und 88 g NMP zugetropft. Die Aufarbeitung erfolgte analog Beispiel 8.
Aschegehalt: 350 ppm.

Beispiel 10

Polyetheramid aus BAB, TPC, Isophthaloylchlorid, FBC und PO in NMP:

410,5 g (1,0 mol) BAB wurden unter Stickstoff in 1816 g trockenem NMP gelöst. Bei 5 °C wurde ein homogenes Gemisch von je 99,48 g TPC und IPC (jeweils 0,49 mol, zusammen 0,98 mol = 98 %) zugegeben und mit 100 ml NMP nachgespült. Nach Erreichen von 50 °C Innentemperatur (ca. 0,5 h) wurden 6,34 g (40 mmol = 4 %) FBC zugesetzt. 1 h später wurde eine Mischung aus 122 g (2,1 mol) PO und 147 g NMP zugetropft. Die Aufarbeitung erfolgte analog Beispiel 8.
Aschegehalt: 100 ppm.

Vergleichsbeispiel C zeigt, daß keine Endgruppenkontrolle möglich ist, wenn die Endgruppenverschlußreagenzien zu einem Polymeren mit experimentell maximal erreichbaren Molekulargewicht zugesetzt werden.

129,75 g (0,316 mol = 100 %) BAB wurden in 2110 g trockenem NMP gelöst. Bei 15 °C wurden zunächst 60,96 g (0,300 mol = 95 % TPC zugesetzt. Nach Erreichen von 70 °C wurden portionsweise weitere 3,8 g (18,7 mmol zusammen 100,29 %) TPC zugesetzt bis kein weiterer Anstieg der Viskosität der Polymerisationslösung beobachtet wurde. 0,95 g (6 mmol = 1,9 %) FBC wurden zugegeben und 80 Min. bei 70 °C nachgerührt. Anschließend wurden 0,67 g (6 mmol = 1,9 %) 4-Fluoranilin zugegeben. 80 Min. später wurden 34,96 g (0,623 mol) CaO zugesetzt. Nach 1 h bei 70 °C wurde filtriert und wie im Beispiel 8 aufgearbeitet.

Tabelle:

| Beispiele 8-10 und Vergleichsbeispiel C | | | | | | |
|---|---|---|---|---|---|---|
| Bsp. | Mol- Verh. q | $[\eta]_o$ [a)] | % F (NMR)[b)] | % F (EA) c) | Fluorg. berechn./% d) | Aschegehalt/ ppm |
| 8 | 97 | 1,10 | 0,195+0,010 | 0,18 | 0,21 | 460 |
| 9 | 98 | 1,40 | 0,157+0,008 | 0,14 | 0,14 | 350 |
| 10 | 98 | 1,35 | 0,135+0,007 | 0,11 | | |
| C[e)] | 100 | 3,0 | < 0,01 % [f)] | < 0,01[f)] | 0,03 | |

a) Staudingerindex in dl/g

b) gemessen als 4-Fluorbenzamidendgruppe im $^{19}$F-NMR-Spektrum

c) Elementaranalyse (EA)

d) berechnet nach $M_n = \frac{1+q}{1-q} \cdot 270 = \frac{3800}{F/\%}$ und $[\eta]_o = k \cdot M_w{}^a$ mit $D = \frac{M_w}{M_n} = 2$

e) Polymer zersetzt sich beim Erwärmen zu einer schwarzen Masse

f) unterhalb Nachweisgrenze

In den erfindungsgemäßen Polymeren 8-10 wurden 79 - 100 % des Fluors aus den 4-Fluorbenzamidendgruppen wiedergefunden. Im nicht erfindungsgemäßen Beispiel C konnte kein Fluor gefunden werden, d. h. weniger als 33 % der Polymerendgruppen trugen Fluor (unvollständiger Endgruppenverschluß).

Beispiele 11, 12, 13

Diese Versuchsreihe zeigt, daß ein Überschuß an Endgruppenverschlußreagenz (hier BCl) unschädlich für das schmelzbare Polymere ist.

| Bsp. | % a) | $[\eta]_o$/dl/g | $M_n$ (PS)/gmol$^{-1}$ | D |
|---|---|---|---|---|
| 11 | 8 | 0,95 ± 0,04 | 62.000 | 1.81 |
| 12 | 9 | 0,96 ± 0,04 | 63.000 | 1.82 |
| 13 | 10 | 1,03 ± 0,05 | 61.000 | 1.83 |
| Durchschnitt | / | 0,98 | 62.000 | 1.82 |

a) Molprozent Endgruppenverschlußreagenz Benzoylchlorid (BCl); 7 % = stöchiometrisch

Die Untersuchungen ergaben - im Rahmen der Meßgenauigkeit - keinen Unterschied zwischen den Polymeren 11, 12 und 13. Auch im Meßkneter bei 340 °C verhielten sich die Proben vergleichbar.

Beispiel 11

410,5 g (1,0 mol = 100 %) BAB wurden unter Stickstoff in 2009 g trockenem NMP bei 3 °C vorgelegt und 195,91 g (0,965 mol = 96,5 %) TPC zugesetzt. Zunächst wurde auf 50 °C und anschließend auf 70 °C erwärmt (ca. 0,5 h). Nach Zugabe von 11,24 g (0,08 mol = 8 %) BCl wurde 30 min bei 70 °C weitergerührt und schließlich eine flüssige Mischung aus 128 g P0 und 154 g NMP zugetropft. Die Aufarbeitung erfolgte wie im Beispiel 8 angegeben.
Aschegehalt: 98 ppm

Beispiel 12

Durchführung wie Beispiel 11; jedoch wurden statt 8 % BCl hier 9 % = 0,09 mol = 12,65 g BCl zugegeben.

Beispiel 13

Durchführung wie Beispiel 11; jedoch wurden statt 8 % BCl hier 10 % = 0,1 mol = 14.57 g BCl zugegeben.
Aschegehalt: 59 ppm

Beispiel 14

Polyethersulfon-amid aus Bis-[4(4-aminophenoxy)phenyl]sulfon, TPC, IPC und BCl in NMP:

Wie Beispiel 1 jedoch mit folgenden Einsatzstoffen:

3676 g (8,5 mol) BAPS (Reinheit 98,6 %)
jeweils 828,3 g (4,08 mol) IPC und TPC (8,16 mol = 96 %) 106,8 g (0,76 mol = 9 %) BCl und
518 g (9,24 mol) Ca0 in
insgesamt 18.270 g NMP

statt Aceton, das als Weichmacher wirkt, wurde Methanol zum Nachwaschen verwendet.

Staudingerindex: $[\eta]_o$ = 0,81 dl/g
GPC: $M_n$ (PS) = 56.000 g/mol; $D=M_w/M_n$ = 2,2

Vergleichsbeispiel D zeigt den negativen Einfluß ionischer Verunreinigungen auf die Schmelzbarkeit.

Zu einem nach Beispiel 11 hergestellten Polymeren mit < 500 ppm Veraschungsgehalt, das an sich im Knetversuch bei 340 °C unter Schutzgas innerhalb 30 min keine drastische Veränderung aufwies, wurde ein Gemisch der stabilen Acetylacetonate folgender Ionen so zugesetzt, daß sich folgende Verunreinigungskonzentrationen im Polymeren in ppm ergaben:
330 Fe, 130 Cr, 130 Ni, 10 Mo, 10 Mn, 10 Cu, 10 Co, 10 V.

Innerhalb weniger Minuten wurde im Knetversuch bei 340 °C eine glänzend schwarze zersetzte Masse erhalten, die sich nicht mehr völlig in NMP lösen ließ.

Beispiel 15 und 16

Zwei Polymerchargen, gemäß Beispiel 8 - jedoch mit 96 % TPC - hergestellt, wurden unter sonst gleichen Bedingungen unter Argon extrudiert.

| Bsp. | Heizzonen[a)]/°C | $^{T}$Masse/°C | Staudingerindex/dl/g | | |
|---|---|---|---|---|---|
| | | | vor Extrusion | nach Extrusion | nach 20 min. Standzeit extrudiert |
| 15 | 310/320/330/340 | 360 | 0,83 | 0,58 | 0,60 |
| 16 | 330/340/350/360 | 380 | 0,74 | 0,66 | 0,57 |

a) Die letzte Eintragung gibt die jeweilige Düsentemperatur an.

Alle extrudierten Proben - auch die, die zusätzlich 20 min bei Temperaturen von 360 bis 380 °C im Extruder standen - zeigen eine gelb-braune Färbung. Die ca. 2 mm dicken Probestränge sind mechanisch fest, d. h. sie lassen sich von Hand nur mit Mühe - bevorzugt an Gaseinschlüssen - brechen.

Beispiel 17

Phthalsäureanhydrid als Kettenverschlußmittel

Polyetheraramid aus BAB, TPC und Phthalsäureanhydrid und PO in NMP:

410,5 g (1,0 mol = 100 %) BAB wurden unter Stickstoff in 2020 g trockenem NMP bei 3 °C vorgelegt und 196,93 g (0,97 mol = 97 %) TPC zugegeben. Anschließend wurde unter fortgesetztem Rühren auf 50 °C aufgeheizt und 8,89 g (0,06 mol = 6 %) PSA zugesetzt. 1 h später wurde eine Mischung aus 118 g P0 und 143 g NMP zugetropft. Nach Aufarbeitung wie in Beispiel 8 beschrieben und zusätzlicher Trocknung bei 200 °C (3h), wurden 505 g (93 %) eines farblosen Polymerpulvers erhalten, das folgende Eigenschaften aufwies:

Staudingerindex: $[\eta]_o = 1,1$ dl/g
GPC: $M_n$ (PS) = 66.000 g/mol, $D = M_w/M_n = 2,4$

Das 300 MHz $^1$H-NMR-Spektrum und das entsprechende $^{13}$C-NMR-Spektrum (Lösungsmittel DMSO-$d_6$), wies folgende für die Phthalimido-Endgruppe charakteristische Signale auf: 7,86-7,96 ppm (m, 2 mol-%), bzw. 124, 132, 135, 167 ppm. Im Rahmen der Meßgenauigkeit liegen alle Endgruppen in Form des Phthalimids vor. Der Knetversuch bei 340 °C zeigte nach 30 min keine Zersetzung der Schmelze.

Beispiel 18 a

Polyetheramid unter Verwendung von $NH_3$-Gas als Neutralisationsmittel

Beispiel 11 wurde wiederholt mit dem Unterschied, daß 30 min nach BCI-Zugabe $NH_3$-Gas in die Lösung eingeleitet wurde und nach weiteren 30 min 50 ml Eisessig zum Abpuffern des $NH_3$-Überschusses zugesetzt wurde. Vom ausgefallenen $NH_4Cl$ wurde abfiltriert und - wie bereits in Beispiel 8 beschrieben - aufgearbeitet.

Staudingerindex: $[\eta]_o = 0,96$ dl/g
GPC: $M_n$ (GPC) = 53.000 g/mol, D = 2,1
Aschegehalt: 156 ppm.

Beispiel 18 b

Polyetheramide unter Verwendung von Wasser als HCl-bindendem Mittel

Beispiel 11 wurde wiederholt, jedoch wurde kein Neutralisationsmittel zugesetzt, sondern die salzsaure Polymerlösung aus einem gläsernen Tropftrichter direkt in E-Wasser eingetropft. Das Wasser diente somit nicht nur zum Ausfällen des Polymers, sondern auch zur Bindung der gebildeten HCl als wäßrige, verdünnte Salzsäure. Nach Aufarbeitung wie in Beispiel 8 wurde ein Aschegehalt von 30 ppm bestimmt.

Beispiel 18 c

An 8 Proben des gemäß den vorgenannten Beispielen hergestellten Terephthalamids des 2,2-Bis-[4-(4-aminophenoxy)phenyl]propan wurden folgende Daten gemessen:

| $[\eta]_o$/dl/g | $M_w$/g/mol a) | $M_w$(PS)/g/mol b) | $\eta_m$/Pa.s c) |
|---|---|---|---|
| 0,64 | 23.000 | 73.000 | 2.000 |
| 0,82 | 33.000 | 64.000 | 3.000 |
| 0,96 | 42.000 | 95.000 | 8.000 |
| 1,08 | 50.000 | 127.000 | 20.000 |
| 1,65 | 82.000 | - | - |
| 2,00 | 130.000 | - | 500.000 |
| 2,25 | 143.000 | - | - |
| 2,61 | 185.000 | - | ca. $10^6$ |

a) Lichtstreumessung liefert absolutes Molekulargewicht
b) GPC-Messung liefert Molekulargewicht relativ zu Polystyrol
c) Nullscherviskosität in der Schmelze bei 340 °C

Durch graphische Auftragung der Nullscherschmelzviskosität bei 340 °C über dem Molekulargewicht (Fig. 3) wird unmittelbar einsichtig, daß Polymere mit $M_W$ > 80.000, d. h. $M_n$ > 20.000 - 40.000, je nach Uneinheitlichkeit, entsprechend $[\eta]_o$ > 1,5 dl/g keine durch normalen Spritzguß formbare Massen ergeben. Insbesondere erhält man unterhalb ungefähr $[n]_o$ = 1,1 dl/g ($M_w$ = 50.000) Polymere mit Schmelzviskositäten von weniger 10 000 Pa·s, die ohne größere verarbeitungstechnische Probleme im Spritzguß verarbeitet werden können.

Beispiel 19

Copolymer mit einem zweiten Diamin.

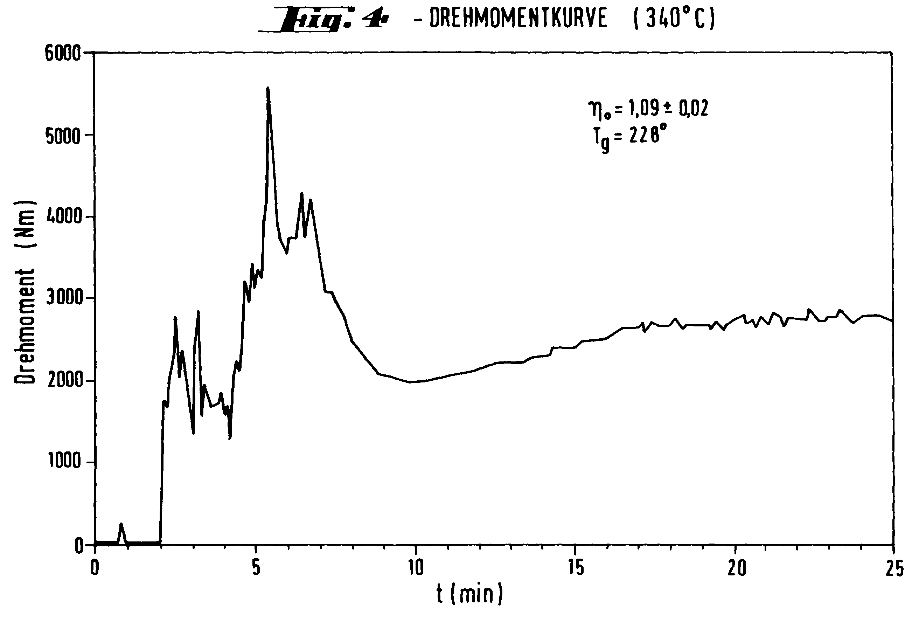

Beispiel 8 wurde wiederholt; jedoch wurden 20 mol-% des BAB durch 4,4'-Diamino-3,3'-dimethylbiphenyl und FBC durch BCl ersetzt. Das wie in Beispiel 8 aufgearbeitet und getrocknete Polymer wies eine Glasübergangstemperatur (DSC) $T_g$ = 228 °C auf. Staudingerindex: $[\eta]_o$ = 1.09 dl/g entspricht $M_w$ = 51.000 g/mol. GPC: $M_n$ = 66.000 g/mol; D = 2,1. Homogene Preßplatten wurden bei 320 °C erhalten unter einem Druck von zunächst 10 bar (10 Min.) und 210 bar (5 Min.). Daraufhin wurden 60 g des Pulvers im Meßkneter unter Argon bei 340 °C 25 Min. bei 100 U/Min. untersucht. Die abgebildete Meßkurve (Fig. 4) zeigt zunächst Schwankungen des Drehmoment, die vom Einfüllvorgang herrühren. Der Anstieg zum Maximalwert entspricht der Plastifiziervorgang, der schließlich in einem praktisch konstanten Plateau ausläuft. Dies entspricht einer vollständigen, stabilen Schmelze. Die nach dieser Behandlung erhaltenen massiven Polymerstücke sind in NMP fast völlig löslich, verändern sich jedoch in Methylenchlorid nicht.

Beispiele 20-25

Entsprechend den vorgenannten Beispielen wurden Aramide aus BAB und 2,5-Furandicarbonsäuredichlorid als eine der Säurekomponenten hergestellt.

| Bsp. | %FDC | %IPC | %TPC | Molverhältnis q/% | BCl/% | Neutral.mittel |
|---|---|---|---|---|---|---|
| 20 | 50 | - | 50 | 97 | 6 | PO |
| 21 | 100 | - | - | 94,5 | 12 | CaO |

(continued)

| Bsp. | %FDC | %IPC | %TPC | Molverhältnis q/% | BCI/% | Neutral.mittel |
|---|---|---|---|---|---|---|
| 22 | 50 | - | 50 | 97 | 8,8 | CaO |
| 23 | 100 | - | - | 97 | 6 | CaO |
| 24 | 100 | - | - | 95 | 10 | CaO |
| 25 | 20 | 20 | 60 | 96,5 | 8 | CaO |

Aus den Polymerpulvern aus Bsp. 20 - 25 ließen sich bei 340 °C problemlos transparente Platten pressen. Beispiel 20 zeigt in der DSC eine Glasstufe bei 230 °C und keine (Re-) Kristallisation, d. h. es liegen überwiegend amorphe Polymere vor.

Die Polymerpulver aus Beispiel 21 und Beispiel 23 wurden unter den in Beispiel 1 angegebenen Bedingungen extrudiert. Die Extrusion bei 40 und 80 rpm erfolgte problemlos, obwohl in Beispiel 23 anfangs Schmelzebruch auftrat. Es wurden glatte, braun-transparente Stränge erhalten, die sich nach Abkühlen in Wasser zu Granulat verarbeiten ließen.

Beispiel 26:

Polyetheramid aus 2,6-Naphthalindicarbonsäuredichlorid (NDC) und BAB

410,5 g (1,0 mol) BAB wurden unter Stickstoff in 2051 g trockenem NMP gelöst. Bei 5 °C wurden 244,3 g (0,965 mol) NDC zugegeben. Die Innentemperatur stieg zunächst auf 35 °C; anschließend wurde auf 70 °C erwärmt. 60 min später wurden 11,8 g (0,084 mol) BCI zugesetzt und, nach weiteren 30 min, 62 g (1,1 mol) CaO als Suspension in 33 g NMP zugegeben. Es wurde 90 min nachgerührt und wie in Beispiel 8 aufgearbeitet.
Die Untersuchungsergebnisse sind in der folgenden Tabelle zusammengestellt.

Beispiel 27-31:

Copolyetheramide aus NDC und anderen Disäurechloriden

Analog Beispiel 26, jedoch wurde BAB in 1200 g NMP vorgelegt und die homogene Lösung der in folgender Tabelle angegebenen Säurechloride in 763 g NMP zugegeben. Die erhaltenen Polymerproben wurden unter Vakuum zu Platten gepreßt (340 °C: 10 min aufheizen, 2 min Preßkuchen 100 bar). Die glasblasenfreien, gelblichen Platten sind mechanisch stabil und zeigen Fließspuren, die auf eine gute Schmelzverarbeitbarkeit schließen lassen.

| Bsp. | %NDC | %TPC | %IPC | %FDC | $\|\eta\|_o/dl \cdot g^{-1}$ | GPC-Auswertung $M_n$ (PS-Standard) | D | DSC $Tg^{a)}$ | DSC $Tg^{b)}$ |
|---|---|---|---|---|---|---|---|---|---|
| 26 | 100 | 0 | 0 | 0 | 1,13±0,01 | 43.000 | 2,9 | 229 | 228[c)] |
| 27 | 50 | 50 | 0 | 0 | 0,83±0,01 | 35.000 | 2,4 | 226 | 225 |
| 28 | 50 | 0 | 50 | 0 | 0,85±0,05 | 31.000 | 2,7 | 226 | 226[d)] |
| 29 | 70 | 0 | 30 | 0 | 0,89±0,01 | 42.000 | 2,3 | 228 | 228 |
| 30 | 70 | 0 | 0 | 30 | 0,80±0,03 | 41.000 | 2,3 | 227 | 228 |
| 31 | 33 1/3 | 0 | 33 1/3 | 33 1/3 | 0,83±0,05 | 38.000 | 2,2 | 223 | 227 |

a) Glastemperatur des Polymerpulvers

b) Glastemperatur der Preßplatte (Vak. 340 °C, 15 min: 0 bar; 5':100 bar)

c) zusätzlich schwacher Schmelzpeak bei 350 °C (1,1 J/g)

d) zusätzlich schwacher Schmelzpeak bei 335 °C (0,5 J/g)

Beispiel 32:

Copolyetheramid aus TPC, BAB und 2,2-Bis(4-aminophenyl) propan (PBA)

Analog Beispiel 26, jedoch wurden 246,3 g (0,6 mol) BAB mit 135,6 g (0,6 mol) PBA in 2030 g NMP vorgelegt und mit 235,1 g (1,158 mol = 96,5 %) TPC polykondensiert. Schließlich wurden 14,2 g (0,11 mol) BCl und zuletzt 74 g (1,3 mol) CaO, suspendiert in 40 g NMP zugesetzt.
Nach Aufarbeitung wie in Beispiel 8 angegeben wurden gemessen:

Staudinger-Index $[\eta]_o$=0,82 ± 0,01 dl/g
GPC (PS): $M_n$ = 35.000 g/mol; D = 2,2.

Das Polymerpulver konnte unter Vakuum zu einer durchscheinenden, biegsamen Platte gepreßt werden (340 °C): Aufheizzeit 10 min, Preßzeit 2 min mit Preßdruck 100 bar. Die DSC-Untersuchung ergibt eine Glastemperatur $T_g$=258 °C (amorph). Die Preßplatte zeigt dasselbe Verhalten, woraus auf eine gute Schmelzestabilität des Polymeren geschlossen werden darf.

Vergleichsbeispiel E demonstriert, daß Polymere gleicher Brutto-Zusammensetzung wie Bsp. 3-7 dieser Anmeldung durch Grenzflächenkondensation hergestellt, und daher ohne Molekulargewichtskontrolle und effizienten Endgruppenverschluß zu nicht thermoplastischen verarbeitbarem Material führen.

Vergleichsbeispiel E:

Äquimolares Verhältnis von Säure- zu Aminkomponente, Grenzflächenkondensation, Variation des Verhältnisses TPC/IPC.

Eine Lösung von 76,30 g (1,907 mol) NaOH und 0,82 g (7,5 mmol) Hypophosphoriger Säure in 800 g Eis wurde in einem Warring Blendor mit der Lösung von 328,4 g (0,8 mol) BAB in 1,2 kg trockenem Cyclohexanon durchmischt. Dazu wird eine Lösung von 182,41 g (0,8 mol) der jeweiligen Mischung von TPC und IPC in 1,2 kg Cyclohexanon unter kräftiger Durchmischung gegeben und mit 100 g Cyclohexanon nachgespült. Unter weiterem Rühren wurde von außen mit Eiswasser gekühlt, um die Temperatur bei 2-5 °C zu halten. Nach 3 h werden 6,0 g( 0,043 mol) Benzoylchlorid gelöst in 100 g Cyclohexanon eingetragen und innerhalb von ca. 1 h auf Raumtemperatur erwärmt. Nach weiteren 2 h bei Raumtemperatur wird die pastöse Masse mit ca. dem doppelten Volumen Methanol behandelt und das so ausgefüllte Polymerpulver weiter aufgearbeitet wie in Beispiel 1 angegeben, wobei sorgfältig auf vollständige Entfernung des restlichen Cyclohexanons im Oelpumpenvakuum - zuletzt bei 200 °C - geachtet wurde.

An den so hergestellten, nicht erfindungsgemäßen Polymeren wurden folgende analytischen Daten ermittelt:

| Vergleichsbeispiel | TPC/IPC | $[\eta]_o$ dl/g D | $M_n$ | GPC D |
|---|---|---|---|---|
| E-3 | 2/8 | 3,8 | 236.000 | 14 |
| E-4 | 3/7 | 1,9 | 88.000 | 4,4 |
| E-5 | 4/6 | 2,5 | 99.000 | 4,3 |
| E-6 | 5/5 | 2,1 | 89.000 | 4,0 |

Alle vier Polymerproben ergaben im Knetversuch unter Argon-Schutzgasatmosphäre (60 g, 340 °C) innerhalb von 4-10 min dunkelbraune bis schwarze, brüchige Materialien, die ohne Anzeichen einer Schmelze, offensichtlich zersetzt waren. Eine weitergehende thermoplastische Verarbeitung, z. B. Extrusion war unter diesen Umständen nicht möglich.

Allgemeines zur Untersuchung der Polymere:

Zur Charakterisierung der Polymeren, insbesondere der Schmelzviskosität und der zeitlichen Stabilität der Schmelze, lassen sich Kneter einsetzen. (Kneter/Meßextruder: HAAKE Rheocord System 90 mit Knetkammer 400 °C und Doppelschneckenextruder TW 100). Üblicherweise wird dazu das Drehmoment des Kneters über die Zeit aufgenommen. Der Verlauf der Kurve läßt Rückschlüsse über die Stabilität der Schmelze zu.

Die Absolutmessung der Schmelzviskosität kann in kommerziell erhältlichen Viskosimetern, z. B. Kapillarviskosimeter oder Platte-Platte-Viskosimeter (Göttfert Werkstoff Prüfmaschine, Schmelzindex-Prüfgerät, Modell MPS-D; Rheometrics Dynamic Spectrometer System 4 mit Platte/Platte-Geometrie, $N_2$ erfolgen. Neben der wichtigen Aussage über Abhängigkeit der Schmelzviskosität von der Scherrate lassen diese Messungen auch eine Beurteilung der Schmelzestabilität zu.

Anwendungsbeispiele

A. Metallack aus der Lösung des Polyetheraramids

Die Polykondensationslösung aus Beispiel 8 wurden auf jeweils 3 Drähte aus Kupfer bzw. Edelstahl aufgebracht, die zuvor mit NMP entfettet worden waren. Nach 16 h Trocknung bei ca. 200 mbar (120 °C) und anschließend 8 h bei < 10 mbar wurde ein klarer Lackfilm erhalten, der seine Kratz- und Biegefestigkeit auch nach 4 h Lagerung in kochendem Wasser und nachfolgender 4 h Lagerung in Aceton bei Raumtemperatur beibehielt.

B. Metallack aus Pulver des Polyetheraramids

Das Polymerpulver aus Beispiel 5 wurde auf ein vorher mit NMP gereinigtes Kupferblech aufgetragen und im vorgeheizten Vakuumtrockenschrank bei 0,5 mbar und 370 °C innerhalb 5 h eingebrannt. Auch nach Auskochen mit Wasser und anschließender Behandlung mit Aceton, blieb die hervorragende Haft- und Kratzfestigkeit der Beschichtung erhalten.

**Patentansprüche**

**1.** Thermoplastisch verarbeitbares aromatisches Polyetheramid der Formel (I)

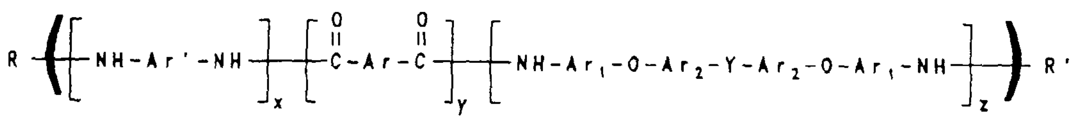 (I)

worin die Symbole Ar, Ar', $Ar_1$, $Ar_2$, R, R', Y, x, y und z folgende Bedeutungen haben:
Ar bedeutet einen zweiwertigen substituierten oder unsubstituierten aromatischen oder heteroaromatischen Rest oder eine Gruppe

$$-Ar^* - Q - Ar^* -$$

worin

Q für eine Bindung oder -O-, $-C(CH_3)_2-$, -CO-, -S-, -SO- oder $-SO_2$-Brücke und Ar* für einen aromatischen Rest steht, die Carbonylgruppen des Ar Restes sich an nicht benachbarten Ringkohlenstoffatomen befinden und dieser gegebenenfalls mit einem oder zwei verzweigten oder unverzweigten $C_1$-$C_3$ Alkyl- oder Alkoxyresten, Aryl- oder Aryloxyresten, $C_1$-$C_6$ Perfluoralkyl- oder Perfluoralkoxyresten mit Fluor-, Chlor-, Brom- oder Jodatomen substituiert ist und
Ar bis zu drei verschiedene Reste bedeutet,
Ar und Ar' sind gleich oder verschieden unabhängig voneinander, wobei Ar' die für Ar angegebene Bedeutung hat oder eine Gruppe Ar-Z-Ar darstellt, wobei Z eine $-C(CH_3)_2-$ oder -O-Ar*-O-Brücke ist;
$Ar_1$ und $Ar_2$ sind gleich oder verschieden voneinander und stehen jeweils für einen substituierten oder unsubstituierten para- oder meta-Arylenrest, wobei Y eine $-C(CH_3)_2-$, -CO-, $-SO_2-$, -S- oder eine $-C(CF_3)_2$-Brücke ist, dadurch gekennzeichnet, daß

a) die Summe der Molenbrüche x, y und z eins ist, die Summe von x und z nicht gleich y ist, und x den Wert Null annehmen kann,

b) die Enden der Polymerkette vollständig mit monofunktionellen, im Polymer nicht weiterreagierenden Gruppen R und R' verschlossen sind, wobei R und R' unabhängig voneinander gleich oder verschieden

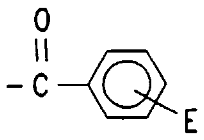 , 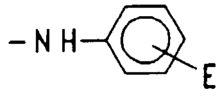 , 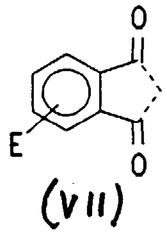 oder 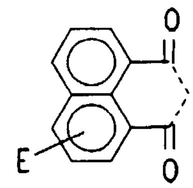

(V) (VI) (VII) (VIII)

sind, wobei E ein Wasserstoffatom, ein Halogenatom oder einen organischen Rest darstellt,

c) das Polyetheramid ein mittleres Molekulargewicht $M_n$ im Bereich von 5000 bis 50 000 aufweist ($M_n$ = absolutes Zahlenmittel),

d) zur Herstellung der Polyetheramide gemäß Formel I das Mol-Verhältnis q (Säurekomponenten zu Diaminkomponenten) im Bereich von 0,90 bis 0,98 und 1,02 bis 1,10, bevorzugt im Bereich von 0,93 bis 0,98 und 1,02 bis 1,07, insbesondere im Bereich von 0,95 bis 0,97 und 1,03 bis 1,05 liegt, wobei exakte Stöchiometrie (q = 1) der bifunktionellen Komponenten ausgeschlossen ist und

e) die Schmelzviskosität der Polyetheramide bei Verarbeitungstemperatur 10 000 Pa·s nicht überschreitet.

**2.** Aromatisches Polyetheramid nach Anspruch 1, dadurch gekennzeichnet, daß dieses einen Staudingerindex im Bereich von 0,4 bis 1,5 dl/g, vorzugsweise im Bereich von 0,5 bis 1,3 dl/g, besonders bevorzugt im Bereich von 0,6 bis 1,1 dl/g, aufweist.

**3.** Aromatisches Polyetheramid nach Anspruch 1, dadurch gekennzeichnet, daß der Gehalt an anorganischen Verunreinigungen im Polymeren nach der Aufarbeitung und Isolierung unter 1000 ppm, bevorzugt unter 500 ppm liegt.

**4.** Aromatisches Polyetheramid nach Anspruch 1, dadurch gekennzeichnet, daß sich die Säurekomponente

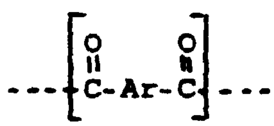

von der Furandicarbonsäure, Terephthalsäure und/oder Isophthalsäure ableitet.

**5.** Aromatisches Polyetheramid nach Anspruch 1, dadurch gekennzeichnet, daß es Einheiten von 2,2-Bis-[4-(4-aminophenoxy)phenyl]propan und/oder Bis-[4-(4-aminophenoxy)phenyl]sulfon enthält.

**6.** Aromatisches Polyetheramid nach Anspruch 1, dadurch gekennzeichnet, daß Ar, Ar', $Ar_1$, $Ar_2$, und Y jeweils bis zu drei verschiedene Bedeutungen haben.

**7.** Verfahren zur Herstellung eines thermoplastisch verarbeitbaren aromatischen Polyetheramids gemäß Anspruch 1, dadurch gekennzeichnet, daß ein oder mehrere Dicarbonsäurederivate der Formel W - CO - Ar - CO - W mit einem oder mehreren Diaminen der Formel $H_2N$ - Ar' - $NH_2$ oder $H_2N$ - $Ar_1$ - O - $Ar_2$ - Y - $Ar_2$ - O - $Ar_1$ - $NH_2$, wobei Ar, Ar', $Ar_1$, $Ar_2$ und Y die oben angegebene Bedeutung haben und W ein Fluor-, Chlor-, Brom- oder Jodatom oder eine -OH oder OR" Gruppe ist, wobei R" ein verzweigter oder unverzweigter aliphatischer oder aromatischer Rest ist, nach dem Lösungs-, Fällungs- oder Schmelzkondensationsverfahren umgesetzt werden, wobei nach Ende der Polykondensation ein Kettenverschlußmittel ausgewählt aus der Gruppe der Formeln (V) bis (VIII), wie im Ansprüch 1 definiert, zugegeben wird.

**8.** Verfahren nach Anspruch 7, dadurch gekennzeichnet, daß das Kettenverschlußmittel ein monofunktionelles, aromatisches, gegebenenfalls substituiertes Säurehalogenid oder Säureanhydrid ist.

**9.** Verfahren nach Anspruch 7, dadurch gekennzeichnet, daß das Kettenverschlußmittel ein monofunktionelles, aromatisches Amin ist.

**10.** Verfahren nach Anspruch 7, dadurch gekennzeichnet, daß das Kettenverschlußmittel in mindestens stöchiometrischen Mengen zugegeben wird.

**11.** Verfahren nach Anspruch 7, dadurch gekennzeichnet, daß das aromatische Polyetheramid Einheiten der Furandicarbonsäure enthält.

**12.** Verfahren nach Anspruch 7, dadurch gekennzeichnet, daß jeweils bis zu drei verschiedene Einheiten der Formel (II), (III) und/oder (IV) eingesetzt werden.

**13.** Verfahren nach Anspruch 7, dadurch gekennzeichnet, daß die Polykondensation in aprotischen polaren Lösungsmitteln bei Temperaturen im Bereich von -20 bis +120 °C, vorzugsweise im Bereich von +10 bis +100 °C durchgeführt wird.

**14.** Verfahren nach Anspruch 7, dadurch gekennzeichnet, daß nach Abschluß der Reaktion 2 bis 40, vorzugsweise 5 bis 30 Gew.-% an Polykondensat in Lösung vorliegen.

**15.** Verwendung der Polyetheramide gemäß Anspruch 1, zur Herstellung von Formkörpern oder für Beschichtungen.

**16.** Verwendung der Polyetheramide gemäß Anspruch 1 zur Herstellung von Drähten, Folien und Fasern.

**17.** Formkörper, hergestellt durch Verpressen, Extrudieren oder Spritzgießen der trockenen, pulverförmigen Polyetheramide gemäß Anspruch 1.

**18.** Formkörper, hergestellt durch Verarbeitung von Lösungen der Polyetheramide gemäß Anspruch 1.

**19.** Formkörper nach Anspruch 18, dadurch gekennzeichnet, daß die Verarbeitung aus der Kondensationslösung des Tieftemperaturlösungsverfahrens, über Tränkverfahren, nach dem Trocken-, Naß- oder Trockennaßspinnverfahren, durch Versprühen, nach dem Koagulations- oder Gießverfahren erfolgt.

## Claims

**1.** A thermoplastically processable aromatic polyether amide of the formula (I)

$$R-\left(\left[NH-Ar'-NH\right]_x\left[\overset{O}{\overset{\|}{C}}-Ar-\overset{O}{\overset{\|}{C}}\right]_y\left[NH-Ar_1-O-Ar_2-Y-Ar_2-O-Ar_1-NH\right]_z\right)-R' \qquad (I)$$

in which the symbols Ar, Ar', $Ar_1$, $Ar_2$, R, R', Y, x, y and z have the following meanings:

Ar is a divalent, substituted or unsubstituted, aromatic or heteroaromatic radical or a group

-Ar*-Q-Ar*-

in which Q is a bond or an -O-, $-C(CH_3)_2-$, -CO-, -S-, -SO- or $-SO_2-$bridge and Ar* is an aromatic radical, the carbonyl groups of the Ar radical are on non-adjacent ring carbon atoms and this is optionally substituted by one or two branched or unbranched $C_1$-$C_3$-alkyl or alkoxy radicals, aryl or aryloxy radicals, $C_1$-$C_6$-perfluoroalkyl or perfluoroalkoxy radicals or by fluorine, chlorine, bromine or iodine atoms, and
Ar is up to three different radicals,
Ar and Ar' are identical or different and independent of one another and
Ar' has the meaning given for Ar or is an Ar-Z-Ar group, in which Z is a $-C(CH_3)_2-$ or -O-Ar*-O- bridge;
$Ar_1$ and $Ar_2$ are identical or different from one another and are in each case a substituted or unsubstituted para- or meta-arylene radical, Y being a $-C(CH_3)_2-$, -CO-, $-SO_2-$, -S- or a $-C(CF_3)_2-$ bridge, wherein

a) the sum of the mole fractions x, y and z is one, the sum of x and z is not equal to y, and x can assume the value zero,

b) the ends of the polymer chain are blocked completely by monofunctional groups R and R' which do not react further in the polymer, R and R' being independently of one another identical or different structures

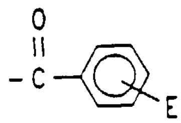
(V) ,
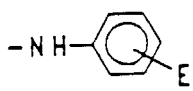
(VI) ,
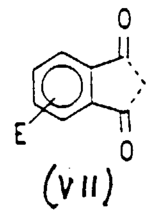
(VII) or
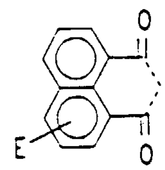
(VIII)

E being a hydrogen atom, a halogen atom or an organic radical,

c) the polyether amide has an average molecular weight $M_n$ in the range from 5000 to 50000 ($M_n$ = absolute number average),

d) the molar ratio q (acid components to diamine components) for preparation of the polyether amides of formula I is in the range from 0.90 to 0.98 and 1.02 to 1.10, preferably in the range from 0.93 to 0.98 and 1.02 to 1.07, especially in the range from 0.95 to 0.97 and 1.03 to 1.05, exact stoichiometry (q = 1) of the bifunctional components being excluded, and

e) the melt viscosity of the polyether amides at the processing temperature does not exceed 10 000 Pa·s.

**2.** An aromatic polyether amide as claimed in claim 1, which has a Staudinger index in the range from 0.4 to 1.5 dl/g, preferably in the range from 0.5 to 1.3 dl/g, particularly preferably in the range from 0.6 to 1.1 dl/g.

**3.** An aromatic polyether amide as claimed in claim 1, wherein the content of inorganic impurities in the polymer after working up and isolation is less than 1000 ppm, preferably less than 500 ppm.

**4.** An aromatic polyether amide as claimed in claim 1, wherein the acid component

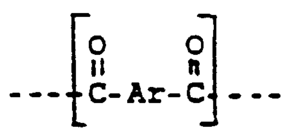

is derived from furandicarboxylic acid, terephthalic acid and/or isophthalic acid.

**5.** An aromatic polyether amide as claimed in claim 1, which contains units of 2,2-bis[4-(4-aminophenoxy)phenyl] propane and/or bis[4-(4-aminophenoxy)phenyl] sulfone.

**6.** An aromatic polyether amide as claimed in claim 1, wherein Ar, Ar', $Ar_1$, $Ar_2$ and Y in each case have up to three different meanings.

**7.** A process for the preparation of a thermoplastically processable aromatic polyether amide as claimed in claim 1, which comprises reacting one or more dicarboxylic acid derivatives of the formula W-CO-Ar-CO-W with one or more diamines of the formula $H_2N$-Ar'-$NH_2$ or $H_2N$-$Ar_1$-O-$Ar_2$-Y-$Ar_2$-O-$Ar_1$-$NH_2$, Ar, Ar', $Ar_1$, $Ar_2$ and Y having the abovementioned meaning and W being a fluorine, chlorine, bromine or iodine atom or an -OH or OR" group, R" being a branched or unbranched aliphatic or aromatic radical, by the solution, precipitation or melt condensation process, a chain-blocking agent selected from the group of the formulae (V) to (VIII), as defined in claim 1, being added after the end of the polycondensation.

**8.** The process as claimed in claim 7, wherein the chain-blocking agent is a monofunctional, aromatic, optionally

substituted acid halide or acid anhydride.

9. The process as claimed in claim 7, wherein the chain-blocking agent is a monofunctional, aromatic amine.

10. The process as claimed in claim 7, wherein the chain-blocking agent is added in at least the stoichiometric amount.

11. The process as claimed in claim 7, wherein the aromatic polyether amide comprises units of furandicarboxylic acid.

12. The process as claimed in claim 7, wherein in each case up to three different units of the formula (II), (III) and/or (IV) are employed.

13. The process as claimed in claim 7, wherein the polycondensation is carried out in an aprotic polar solvent at a temperature in the range from -20 to +120°C, preferably in the range from +10 to +100°C.

14. The process as claimed in claim 7, wherein, after conclusion of the reaction, 2 to 40, preferably 5 to 30 % by weight of polycondensate are present in solution.

15. The use of a polyether amide as claimed in claim 1 for the production of shaped articles or for coatings.

16. The use of a polyether amide as claimed in claim 1 for the production of wires, films and fibers.

17. A shaped article, produced by pressing, extrusion or injection molding the dry pulverulent polyether amide as claimed in claim 1.

18. A shaped article, produced by processing a solution of the polyether amide as claimed in claim 1.

19. A shaped article as claimed in claim 18, for which processing is carried out from the condensation solution of the low temperature solution process, via an impregnation process, by the dry, wet or dry/wet spinning process, by spraying or by the coagulation or casting process.

## Revendications

1. Polyétheramide aromatique, que l'on peut traiter en thermoplastique, de formule I

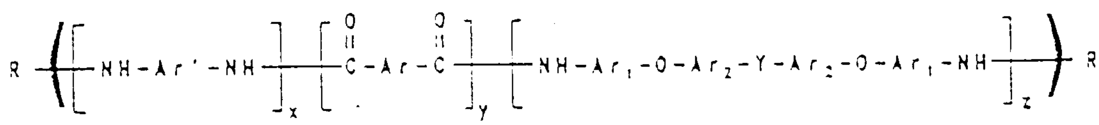

(I)

dans laquelle les symboles Ar, Ar', $Ar_1$, $Ar_2$, R, R', Y, x, y et z ont les significations suivantes :

Ar représente un radical bivalent aromatique ou hétéroaromatique substitué ou non substitué ou un groupe

-Ar*-Q-Ar*-

où Q représente une liaison ou des ponts -O-, $-C(CH_3)_2-$, -CO-, -S-, -SO- ou $-SO_2$ et Ar* représente un radical aromatique, les groupes carbonyles du radical aromatique se trouvent sur des atomes de carbone cycliques non voisins et il est éventuellement substitué par un ou deux radicaux alkyle ou alcoxy en $C_1$-$C_3$ linéaires ou ramifiés, radicaux aryle ou aryloxy, radicaux perfluoroalkyle ou perfluoroalcoxy en $C_1$-$C_6$ ou des atomes de fluor, de chlore, de brome ou de d'iode,
et
Ar représente jusqu'à 3 radicaux différents,
Ar et Ar', indépendapendamment l'un de l'autre, sont identiques ou différents, Ar' ayant la signification donnée pour Ar ou représente un groupe Ar-Z-Ar, Z étant un pont $-C(CH_3)_2-$ ou -O-Ar*-O- ;
$Ar_1$ et $Ar_2$ sont identiques ou différents et représentent chacun un radical arylène non substitué ou substitué

en position para ou méta, Y étant un pont $-C(CH_3)_2-$, -CO-, $-SO_2-$, -S- ou $-C(CF_3)_2-$, caractérisé en ce que

a) la somme des fractions en moles x, y et z est égale à 1, la somme de x et z n'est pas égale à y et x peut avoir la valeur zéro,

b) les extrémités de la chaîne polymère sont fermées complètement par des groupes R et R' monofonctionnels, ne réagissant pas ultérieurement dans le polymère, R et R', indépendamment l'un de l'autre, sont identiques ou différents

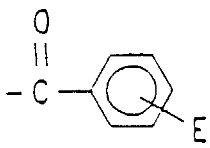
(V)
.
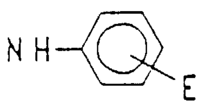
(VI)
.
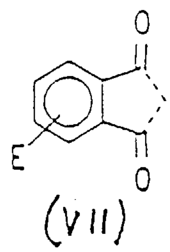
(VII)
ou
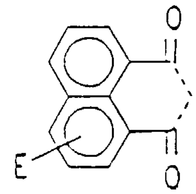
(VIII)

E étant un atome d'hydrogène, un atome d'halogène ou un radical organique,

c) le polyétheramide ayant un poids moléculaire moyen $M_n$ dans l'intervalle de 5 000 à 50 000 ($M_n$ = moyenne absolue en nombre),

d) pour préparer le polyétheramide de formule I, le rapport en moles q (composants acides aux composants diamino) étant dans l'intervalle de 0,90 à 0,98 et de 1,02 à 1,10, de préférence dans l'intervalle de 0,93 à 0,98 et de 1,02 à 1,07, de préférence inférieure dans l'intervalle de 0,95 à 0,97 et de 1,03 à 1,05, la stoechiométrie exacte (q = 1) du composant bifonctionnel étant exclue, et

e) la viscosité en fusion des polyétheramides à la température de mise en oeuvre ne dépasse pas 10 000 Pa.s.

**2.** Polyétheramide aromatique selon la revendication 1, caractérisé en ce qu'il présente un indice de Staudinger dans l'intervalle de 0,4 à 1,5 dl/g, de préférence dans l'intervalle de 0,5 à 1,3 dl/g, de manière particulièrement préférée de 0,6 à 1,1 dl/g.

**3.** Polyétheramide aromatique selon la revendication 1, caractérisé en ce que la teneur en impuretés inorganiques dans le polymère après traitement et isolement est inférieure à 1 000 ppm, de préférence inférieure à 500 ppm.

**4.** Polyétheramide aromatique selon la revendication 1, caractérisé en ce que le composant acide

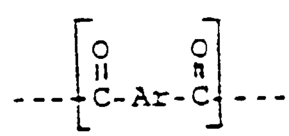

dérive de l'acide furanne-dicarboxylique, de l'acide téréphtalique et/ou de l'acide isophtalique.

**5.** Polyétheramide aromatique selon la revendication 1, caractérisé en ce qu'il contient des motifs 2,2-bis-[4-(4-aminophénoxy)phényl]propane et/ou bis-[4-(4-aminophénoxy)phényl]sulfone.

**6.** Polyétheramide aromatique selon la revendication 1, caractérisé en ce que Ar, Ar', $Ar_1$, $Ar_2$ et Y ont chacun jusqu'à 3 significations différents.

**7.** Procédé pour la préparation d'un polyétheramide que l'on peut traiter en thermoplastique selon la revendication 1, caractérisé en ce qu'on fait réagir un ou plusieurs dérivés d'acides dicarboxyliques de formule W-CO-Ar-CO-W avec un ou plusieurs diamines de formule $H_2N-Ar'-NH_2$ ou $H_2N-Ar_1-O-Ar_2-Y-Ar_2-O-Ar_1-NH_2$ où Ar, Ar', $Ar_1$, $Ar_2$ et Y ont la signification donnée ci-dessus et W est un atome de fluor, de chlore, de brome ou d'iode ou un groupe -OH ou OR", R" étant un radical aromatique ou aliphatique linéaire ou ramifié, par le procédé par condensation par fusion, par précipitation ou en solution, en ajoutant, après avoir terminé la polycondensation, un agent de rupture de chaîne pris dans le groupe de formules V à VIII, définies dans la revendication 1.

8. Procédé selon la revendication 7, caractérisé en ce que l'agent de rupture de chaîne est un anhydride d'acide ou halogénure d'acide monofonctionnel, aromatique, éventuellement substitué.

9. Procédé selon la revendication 7, caractérisé en ce que l'agent de rupture de chaîne est une amine aromatique monofonctionnelle.

10. Procédé selon la revendication 7, caractérisé en ce que l'agent de rupture de chaîne est ajouté dans une quantité au moins stoechiométrique.

11. Procédé selon la revendication 7, caractérisé en ce que le polyétheramide aromatique contient des motifs d'acide furanne-dicarboxylique.

12. Procédé selon la revendication 7, caractérisé en ce qu'on utilise chaque fois jusqu'à trois motifs de formule (II), (III) et/ou (IV) différents.

13. Procédé selon la revendication 7, caractérisé en ce que la polycondensation est mise en oeuvre dans des solvants aprotiques polaires, à des températures dans l'intervalle de -20 à +120°C, de préférence dans l'intervalle de +10 à +100°C.

14. Procédé selon la revendication 7, caractérisé en ce que, après avoir terminé la réaction, 2 à 40, de préférence 5 à 30% en poids de polycondensat sont présents en solution.

15. Utilisation des polyétheramides selon la revendication 1, pour préparer des corps moulés ou des enduits.

16. Utilisation des polyétheramides selon la revendication 1, pour préparer des fils, des feuilles et des fibres.

17. Corps moulés, préparés par commpression, par extrusion ou par moulage par injection des polyétheramides secs, pulvérulants, selon la revendication 1.

18. Corps moulés, préparés par traitement des solutions des polyétheramides selon la revendication 1.

19. Corps moulés selon la revendication 18, caractérisés en ce que le traitement est mis en oeuvre à partir de la solution de condensation du procédé en solution à basse température, en passant par le procédé d'imprégnation, selon le procédé de filage à sec, de filage humide ou sec-humide, par atomisation, selon le procédé de coagulation ou de moulage par coulée.

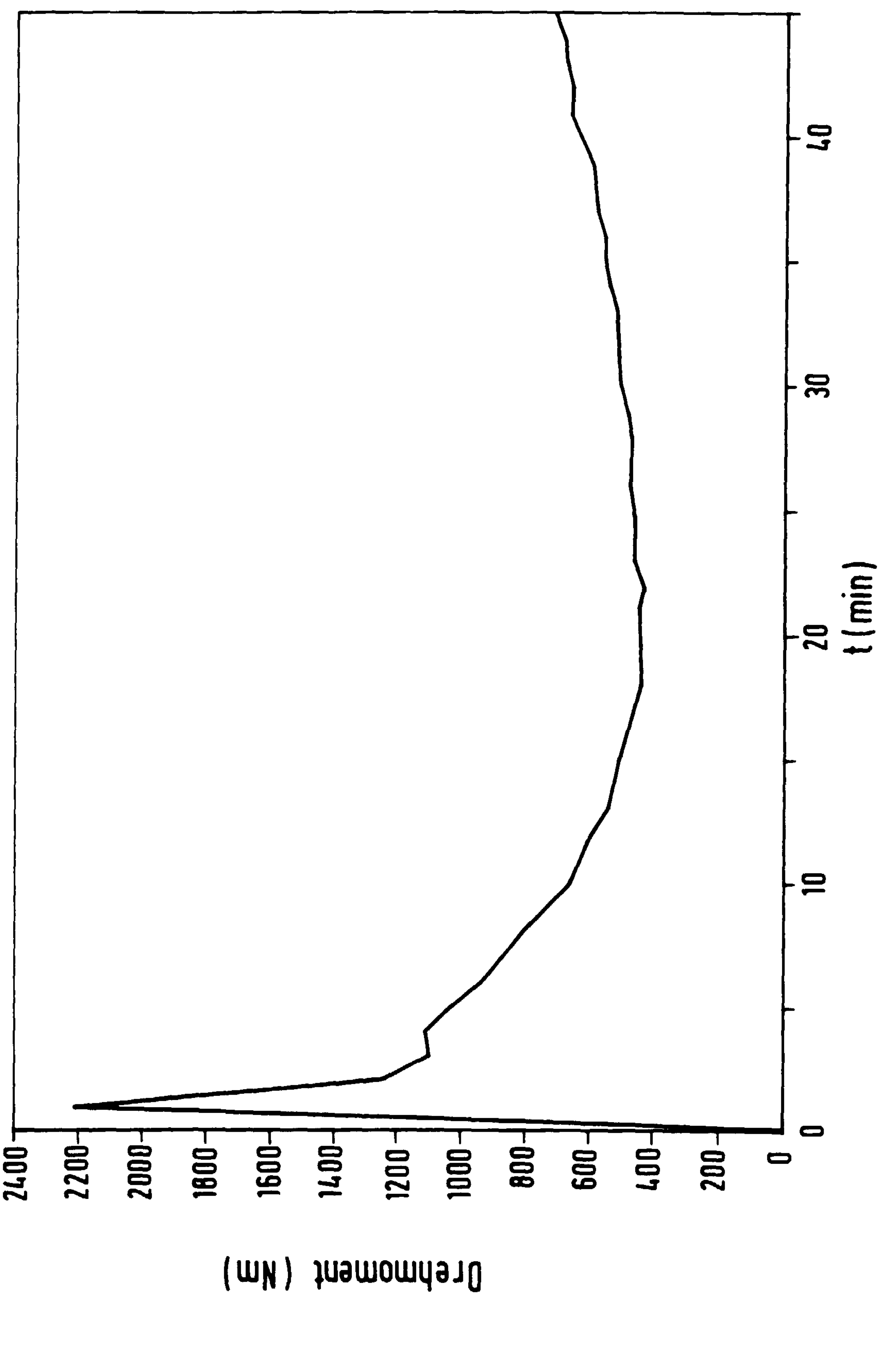
Drehmoment ( Nm)
2400
2200
2000
1800
1600
1400
1200
1000
800
600
400
200
0
0
10
20
30
40
t (min)

Fig. 2

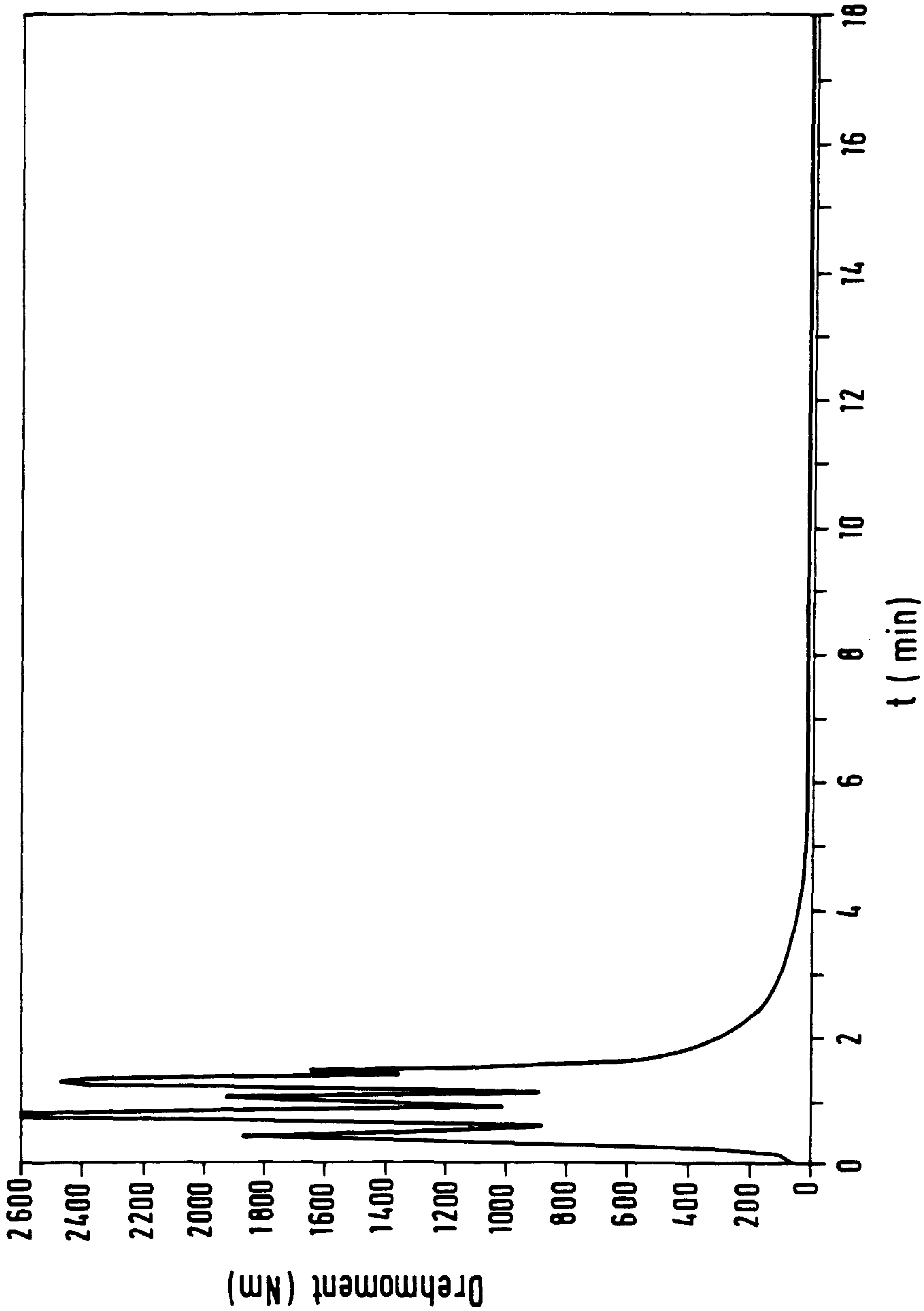
Drehmoment (Nm)
2600
2400
2200
2000
1800
1600
1400
1200
1000
800
600
400
200
0
0
2
4
6
8
10
12
14
16
18
t (min)

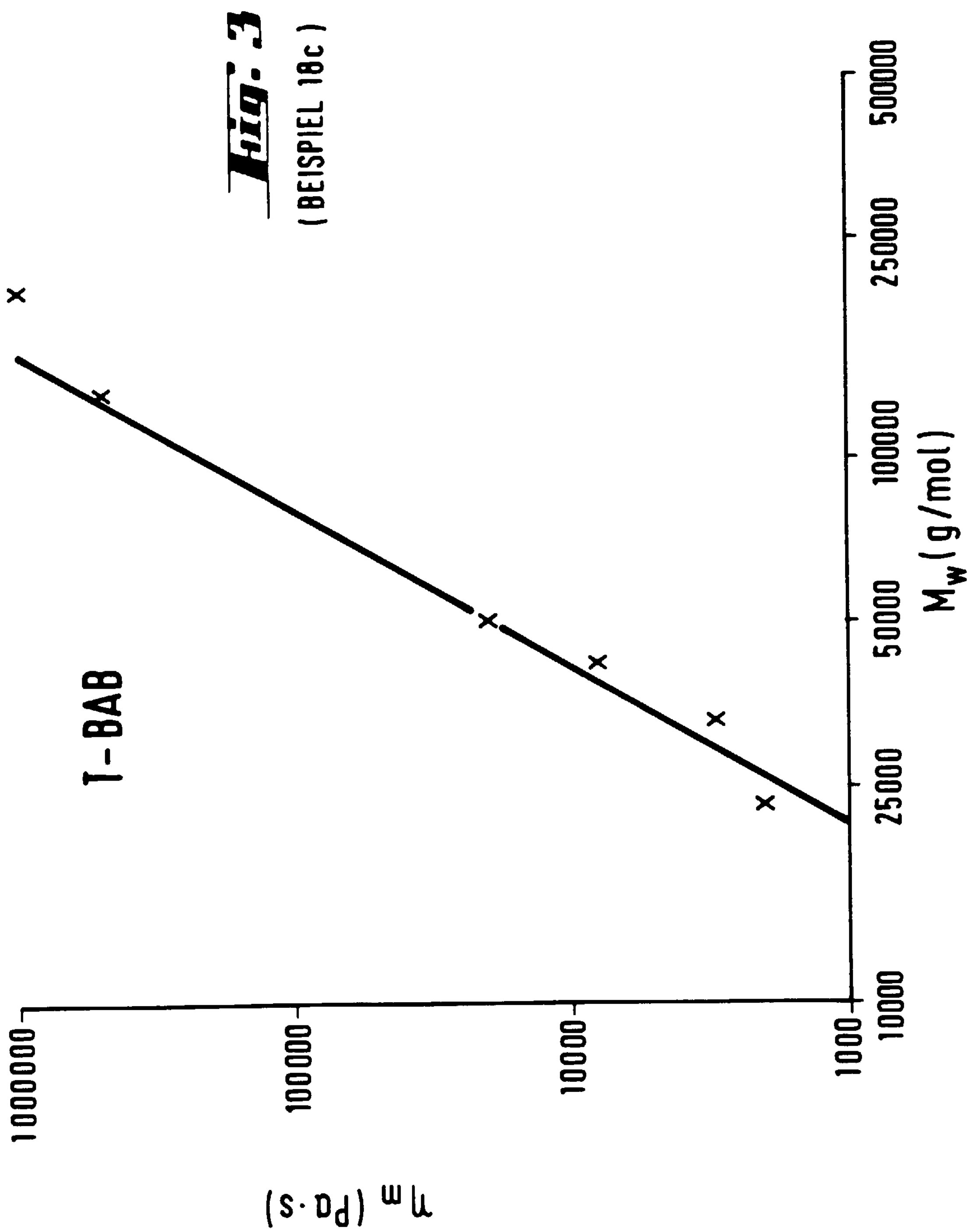


Fig. 3
(BEISPIEL 18c)

Fig. 4 - DREHMOMENTKURVE (340°C)